# EUROPEAN PATENT APPLICATION

(11) **EP 4 838 346 A1**
(43) Date of publication of application: **11.11.2026**
(21) Application number: 25745343.1
(22) Date of filing: 23.01.2025
(51) Int. Cl.: G06F 3/0484, G06F 3/01, G06F 3/00, G06F 1/16, G06F 3/16

(54) **WEARABLE DEVICE FOR AUTOMATICALLY TURNING OFF AT LEAST ONE MICROPHONE ON BASIS OF CHANGE IN INPUT METHOD, AND CONTROL METHOD THEREFOR**

(30) Priority: 26.01.2024 KR 20240012410; 26.01.2024 KR 20240012513; 24.05.2024 KR 20240067664
(71) Applicant: Samsung Electronics Co., Ltd., Suwon-si, Gyeonggi-do 16677 (KR)
(72) Inventor: LEE, Eunkyung, Suwon-si Gyeonggi-do 16677 (KR); LEE, Yoonho, Suwon-si Gyeonggi-do 16677 (KR); KIM, Bowon, Suwon-si Gyeonggi-do 16677 (KR); KIM, Sooryuh, Suwon-si Gyeonggi-do 16677 (KR); SON, Dongil, Suwon-si Gyeonggi-do 16677 (KR); LEE, Yongkoo, Suwon-si Gyeonggi-do 16677 (KR)
(74) Representative: Nederlandsch Octrooibureau
(86) International application number: PCT/KR2025/001301
(87) International publication number: WO 2025/159519

(57) **Abstract**

Disclosed is a wearable device. A wearable device according to one embodiment of the present document may be configured to store instructions for: displaying at least one virtual object through a display module; switching at least one microphone from an off-state to an on-state on the basis of an interaction between the at least one virtual object and a user wearing the wearable device; determining whether a gesture of the user is detected by using the at least one camera while the at least one microphone is in the on-state; determining whether the gesture corresponds to a predetermined gesture for controlling the virtual object on the basis of the determination on whether the gesture is detected, and maintaining the at least one microphone in the on-state or switching the at least one microphone to the off-state on the basis of the determination on whether the gesture corresponds to the predetermined gesture.

## Description

### [Technical Field]

The disclosure relates to a wearable device and a control method thereof for automatically turning off at least one microphone based on a change in input method.

### [Background Art]

Various services and additional functions provided through wearable devices, e.g., devices such as smart glasses, are gradually increasing. To enhance the utility value of such wearable devices and satisfy the needs of various users, communication service providers or wearable device manufacturers are competitively developing wearable devices to provide various functions and differentiate themselves from other companies. Accordingly, various functions provided through wearable devices are also being enhanced.

### [Detailed Description of the Invention]

### [Technical Solution]

Conventional wearable devices provided a function or operation of transitioning from an ON state to an OFF state if a designated time elapses from a time when at least one microphone is set to the ON state. However, the wearable device according to the conventional technology did not provide a function or operation of transitioning the state of the microphone to the OFF state based on user input other than user utterance (e.g., a user gesture).

Further, the wearable device according to the conventional technology provided a function or operation of displaying a user's gaze point through an indicator to the user. However, the wearable device according to the conventional technology did not provide a function or operation that may intuitively inform the user whether a virtual object located in a region focused by the user's gaze is an object controllable by voice command.

According to an embodiment of the disclosure, when a virtual object focused according to a user input (e.g., a user's gaze) is controllable by voice command, a wearable device may be provided that may intuitively inform the user that the virtual object may be controlled by user utterance by providing a visual effect around the virtual object.

According to an embodiment of the disclosure, by providing a visual effect based on the shape of a virtual object and/or the distance from the user, since a visual effect optimized for the focused virtual object may be provided to the user, a wearable device may be provided that provides a visual effect that does not interfere with the user's content browsing.

According to an embodiment of the disclosure, when a virtual object focused according to a user input (e.g., a user's gaze) is controllable by voice command, a control method of a wearable device may be provided that may intuitively inform the user that the virtual object may be controlled by user utterance by providing a visual effect around the virtual object.

According to an embodiment of the disclosure, by providing a visual effect based on the shape of a virtual object and/or the distance from the user, since a visual effect optimized for the focused virtual object may be provided to the user, a control method of a wearable device may be provided that provides a visual effect that does not interfere with the user's content browsing.

According to an embodiment of the disclosure, while providing a control environment (e.g., a multi-modal environment) in which both first user input (e.g., a user utterance) and second user input (e.g., a user gesture) may be input, when second user input (e.g., a user gesture) is set as the main input method (e.g., in case that the user inputs a gesture), a wearable device may be provided that may transition at least one microphone to the OFF state to transition to a control environment (e.g., single-modal environment) in which input according to one type (e.g., second user input) may be input, thereby providing an environment optimized for the main input method.

According to an embodiment of the disclosure, while providing a control environment (e.g., a multi-modal environment) in which both first user input (e.g., a user utterance) and second user input (e.g., a user gesture) may be input, when second user input (e.g., a user gesture) is set as the main input method (e.g., in case that the user inputs a gesture), a control method of a wearable device may be provided that may transition at least one microphone to the OFF state to transition to a control environment (e.g., single-modal environment) in which input according to one type (e.g., second user input) may be input, thereby providing an environment optimized for the main input method.

A wearable device according to an embodiment of the disclosure may include a display module, at least one microphone, at least one camera, at least one processor, and memory. The memory may be configured to store instructions that, when executed by the at least one processor, cause the wearable device to: display at least one virtual object through the display module, transition the at least one microphone from an OFF state to an ON state based on interaction between the at least one virtual object and a user wearing the wearable device, determine whether a gesture of the user is detected using the at least one camera while the at least one microphone is in the ON state, determine whether the gesture corresponds to a pre-designated gesture for controlling the virtual object based on the determination of whether the gesture is detected, and maintain the at least one microphone in the ON state or transition the at least one microphone to the OFF state based on the determination of whether the gesture corresponds to the pre-designated gesture.

A method for controlling a wearable device according to an embodiment of the disclosure may include an operation of displaying at least one virtual object through a display module of the wearable device, an operation of transitioning at least one microphone from an OFF state to an ON state based on interaction between the at least one virtual object and a user wearing the wearable device, an operation of determining whether a gesture of the user is detected using at least one camera while the at least one microphone is in the ON state, an operation of determining whether the gesture corresponds to a pre-designated gesture for controlling the virtual object based on the determination of whether the gesture is detected, and an operation of maintaining the at least one microphone in the ON state or transitioning the at least one microphone to the OFF state based on the determination of whether the gesture corresponds to the pre-designated gesture.

A wearable device according to an embodiment of the disclosure may include a display module, at least one microphone, at least one camera, at least one processor, and memory. The memory may be configured to store instructions that, when executed by the at least one processor, cause the wearable device to: identify a gaze direction of a user using the at least one camera, determine whether a virtual object located in the identified gaze direction of the user is an object controllable by voice command, determine a shape of the virtual object and whether the virtual object is located within a visible distance region based on a result of the determination of whether the virtual object is an object controllable by voice command, and change and display a display attribute of the virtual object based on a result of the determination regarding the shape and the visible distance.

A method for controlling a wearable device according to an embodiment of the disclosure may include an operation of identifying a gaze direction of a user using at least one camera of the wearable device, an operation of determining whether a virtual object located in the identified gaze direction of the user is an object controllable by voice command, an operation of determining a shape of the virtual object and whether the virtual object is located within a visible distance region based on a result of the determination of whether the virtual object is an object controllable by voice command, and an operation of changing and displaying a display attribute of the virtual object based on a result of the determination regarding the shape and the visible distance.

### [Brief Description of Drawings]

FIG. 1 is a block diagram illustrating an electronic device in a network environment, according to various embodiments of the disclosure.
FIG. 2A is a perspective view illustrating a wearable device (e.g., an electronic device) according to an embodiment of the disclosure.
FIG. 2B is a perspective view illustrating an internal configuration of a wearable device (e.g., an electronic device) according to an embodiment of the disclosure.
FIG. 2C is an exploded perspective view illustrating a wearable device (e.g., an electronic device) according to an embodiment of the disclosure.
FIG. 3 illustrates an eye tracking camera structure of a wearable device according to an embodiment of the disclosure.
FIG. 4 is an example view illustrating a function or operation in which a wearable device changes and displays a display attribute of a virtual object based on a shape of a virtual object (e.g., whether the shape is two-dimensional or three-dimensional) and a visible distance according to an embodiment of the disclosure.
FIG. 5A is an example view illustrating a function or operation of changing and displaying a display attribute of an input field when a virtual object includes the input field according to an embodiment of the disclosure.
FIG. 5B is an example view illustrating an indicator related to processing of user utterance displayed by a wearable device according to an embodiment of the disclosure.
FIG. 5C is an example view illustrating a function or operation in which a wearable device displays an utterance hint displayed within an input field with a changed display attribute according to an embodiment of the disclosure.
FIG. 5D is an example view illustrating a function or operation in which a wearable device determines whether a virtual object is within a visible distance based on a distance between the virtual object and a user according to an embodiment of the disclosure.
FIG. 5E is an example view illustrating a visual effect displayed around a virtual object in case that the virtual object is controllable through user utterance according to an embodiment of the disclosure.
FIGS. 5F and 5G are example views illustrating a function or operation in which a wearable device enlarges a virtual object displayed beyond a visible distance and provides the enlarged virtual object to a user together with a visual effect according to an embodiment of the disclosure.
FIGS. 5H and 5I are example views illustrating a function or operation in which a wearable device changes an angle of a virtual object displayed beyond a visible distance and provides the changed virtual object to a user together with a visual effect according to an embodiment of the disclosure.
FIGS. 6A and 6B are example views illustrating a function or operation in which a wearable device provides various visual effects according to attributes of an object according to an embodiment of the disclosure.
FIG. 7A is an example view illustrating a function or operation in which a wearable device converts an icon to text and provides the text to a user as an utterance hint according to an embodiment of the disclosure.
FIG. 7B is an example view illustrating a function or operation in which a wearable device provides different visual effects according to attributes of a virtual object (e.g., a clickable object, a text-inputtable object, etc.) according to an embodiment of the disclosure.
FIG. 8A is an example view illustrating a function or operation in which a wearable device provides a visual effect of grouping a plurality of virtual objects according to an embodiment of the disclosure.
FIGS. 8B and 8C are example views illustrating a function or operation in which a wearable device provides an utterance hint based on text or an icon included in a virtual object according to an embodiment of the disclosure.
FIG. 9A is an example view illustrating a visual effect displayed when a virtual object has a three-dimensional shape according to an embodiment of the disclosure.
FIG. 9B is an example view illustrating a function or operation in which a wearable device displays a visual effect on a virtual object having a three-dimensional shape based on a virtual plane according to an embodiment of the disclosure.
FIGS. 10A and 10B are example views illustrating a function or operation in which a wearable device provides a visual effect based on a degree of a viewing angle of a user according to an embodiment of the disclosure.
FIGS. 10C to 10I are example views illustrating a function or operation in which a wearable device displays a visual effect for a designated space in case that the designated space is controllable by an utterance command according to an embodiment of the disclosure.
FIGS. 11A to 11E are example views illustrating functions or operations in which a wearable device enlarges and displays a virtual object displayed smaller than a designated threshold size and provides a visual effect and an utterance hint according to an embodiment of the disclosure.
FIGS. 12A, 12B, 12C, and 12D are example views illustrating a function or operation in which a wearable device provides a visual effect representing presence of an indicator existing outside a viewing angle of the wearable device to a user according to an embodiment of the disclosure.
FIG. 13 is an example view illustrating a function or operation in which a wearable device provides an utterance hint based on a number of times the utterance hint has been provided according to an embodiment of the disclosure.
FIGS. 14A, 14B, and 14C are example views illustrating a function or operation in which a wearable device provides an utterance hint in a manner similar to a representation method of a virtual object having a three-dimensional shape according to an embodiment of the disclosure.
FIGS. 15A, 15B, and 15C are example views illustrating a function or operation in which a wearable device provides a visual effect to a virtual object that is focused according to gaze movement of a user wearing the wearable device according to an embodiment of the disclosure.
FIG. 16 is an example view illustrating a function or operation in which a wearable device controls at least one microphone (e.g., a microphone module) according to a user input (e.g., a user gesture) according to an embodiment of the disclosure.
FIGS. 17A and 17B are example views illustrating a function or operation of transitioning a microphone module from an OFF state to an ON state according to a user input for a virtual object (e.g., a user's gaze on the virtual object) according to an embodiment of the disclosure.
FIG. 17C is an example view illustrating a function or operation in which a wearable device provides an utterance hint according to an embodiment of the disclosure.
FIG. 17D is an example view illustrating a function or operation in which a wearable device determines an intent of gesture input of a user based on an image acquired through a camera module in a state in which the wearable device is worn by the user according to an embodiment of the disclosure.
FIG. 17E is an example view illustrating pre-designated gestures for controlling a virtual object according to an embodiment of the disclosure.
FIG. 17F is an example view illustrating a control environment (e.g., a multi-modal environment) in which both user utterance and user input other than user utterance may be acquired before a wearable device identifies user input (e.g., a user gesture) according to an embodiment of the disclosure.
FIG. 18 is an example view illustrating a function or operation in which a wearable device controls a microphone module according to a type of detected user gesture (e.g., a first type corresponding to a pre-designated gesture or a second type not corresponding to the pre-designated gesture) according to an embodiment of the disclosure.
FIG. 19 is an example view illustrating a function or operation in which a wearable device provides an utterance hint together with at least one indicator according to an embodiment of the disclosure.
FIG. 20 is an example view illustrating a function or operation in which a wearable device controls a microphone module based on input to an external device operatively connected with the wearable device according to an embodiment of the disclosure.
FIGS. 21A and 21B are example views illustrating a type of external device operatively connected with a wearable device according to an embodiment of the disclosure.
FIGS. 22A, 22B, 22C, and 22D are example views illustrating a function or operation of maintaining a state of a microphone module in an ON state when a keyboard is connected as an external device to a wearable device, as an exception to the function or operation illustrated in FIG. 20, according to an embodiment of the disclosure.
FIGS. 23A and 23B are example views illustrating a function or operation in which a wearable device transitions a state of a microphone module from an ON state to an OFF state when a user gesture is detected and the detected user gesture is determined to correspond to a pre-designated gesture according to an embodiment of the disclosure.
FIGS. 24A, 24B, and 24C are example views illustrating a function or operation in which a wearable device transitions a state of a microphone module from an ON state to an OFF state according to a direct touch gesture of a user on a virtual object according to an embodiment of the disclosure.
FIGS. 25A, 25B, and 25C are example views illustrating a function or operation in which a wearable device transitions a state of a microphone module from an ON state to an OFF state according to a user input to an external device (e.g., a controller) operatively connected with the wearable device according to an embodiment of the disclosure.
FIG. 26 is an example view illustrating a function or operation in which a wearable device detects a mouth shape of a user and controls a microphone module based on detected movement of the mouth according to an embodiment of the disclosure.
FIG. 27 is an example view illustrating a function or operation in which a wearable device controls a microphone module based at least on a gaze of a user when a plurality of applications are being executed according to an embodiment of the disclosure.
FIGS. 28A and 28B are example views illustrating another type of wearable device of the disclosure.
FIG. 29 is an example view illustrating an operation of a wearable device according to an embodiment of the disclosure.
FIG. 30 is an example view illustrating a function or operation in which a wearable device 200 performs limited utterance processing according to an embodiment of the disclosure.
FIG. 31 is an example view illustrating a function or operation in which a wearable device 200 processes user utterance input through the wearable device (200) when an external device connected to the wearable device (200) is not present and a gesture of the user (e.g., a preparatory action for the gesture) is also not detected according to an embodiment of the disclosure.
FIGS. 32A and 32B are example views illustrating a function or operation in which a wearable device 200 processes input user utterance as limited utterance processing based on an intent of gesture input of a user and/or a connection state of an external electronic device according to an embodiment of the disclosure.

### [Mode for Carrying out the Invention]

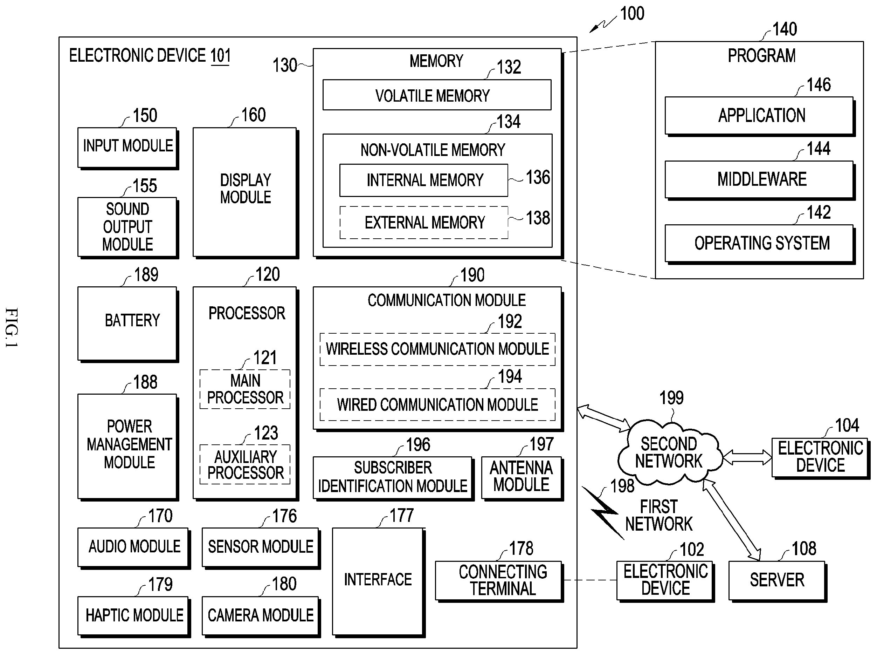

FIG. 1 is a block diagram illustrating an electronic device 101 in a network environment 100, according to various embodiments.

Referring to FIG. 1, in the network environment 100, the electronic device 101 may communicate with an electronic device 102 through a first network 198 (e.g., a short-range wireless communication network), or may communicate with at least one of an electronic device 104 or a server 108 through a second network 199 (e.g., a long-range wireless communication network). According to an embodiment, the electronic device 101 may communicate with the electronic device 104 through the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In some embodiments, at least one of these components (e.g., the connecting terminal 178) may be omitted from the electronic device 101, or one or more other components may be added. In some embodiments, some of these components (e.g., the sensor module 176, the camera module 180, or the antenna module 197) may be integrated into one component (e.g., the display module 160).

The processor 120 may, e.g., execute software (e.g., the program 140) to control at least one other component (e.g., a hardware or software component) of the electronic device 101 connected to the processor 120, and may perform various data processing or operations. According to an embodiment, as at least part of data processing or operation, the processor 120 may store a command or data received from another component (e.g., the sensor module 176 or the communication module 190) in a volatile memory 132, process the command or data stored in the volatile memory 132, and store result data in a non-volatile memory 134. According to an embodiment, the processor 120 may include a main processor 121 (e.g., a central processing unit or an application processor) or an auxiliary processor 123 (e.g., a graphics processing unit, a neural processing unit (NPU), an image signal processor, a sensor hub processor, or a communication processor) that is operable independently of or together with the main processor 121. For example, in case that the electronic device 101 includes the main processor 121 and the auxiliary processor 123, the auxiliary processor 123 may be configured to use lower power than the main processor 121 or to be specialized for a designated function. The auxiliary processor 123 may be implemented separately from, or as part of, the main processor 121.

The auxiliary processor 123 may, e.g., control at least some of functions or states related to at least one component (e.g., the display module 160, the sensor module 176, or the communication module 190) among the components of the electronic device 101, on behalf of the main processor 121 while the main processor 121 is in an inactive (e.g., sleep) state, or together with the main processor 121 while the main processor 121 is in an active (e.g., application execution) state. According to an embodiment, the auxiliary processor 123 (e.g., an image signal processor or a communication processor) may be implemented as part of another component (e.g., the camera module 180 or the communication module 190) that is functionally related. According to an embodiment, the auxiliary processor 123 (e.g., a neural processing unit) may include a hardware structure specialized for processing of an artificial intelligence model. An artificial intelligence model may be generated through machine learning. Such learning may be performed, e.g., in the electronic device 101 itself on which the artificial intelligence model is performed, or may be performed through a separate server (e.g., the server 108). A learning algorithm may include, e.g., supervised learning, unsupervised learning, semi-supervised learning, or reinforcement learning, but is not limited to the above-described examples. An artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bi-directional recurrent deep neural network (BRDNN), deep Q-networks, or a combination of two or more thereof, but is not limited to the foregoing examples. The artificial intelligence model may include, additionally or alternatively, a software structure in addition to a hardware structure.

The memory 130 may store various data used by at least one component of the electronic device 101 (e.g., the processor 120 or the sensor module 176). The data may include, e.g., software (e.g., the program 140) and input data or output data for instructions related thereto. The memory 130 may include a volatile memory 132 or a non-volatile memory 134.

The program 140 may be stored as software in the memory 130 and may include, e.g., an operating system 142, middleware 144, or an application 146.

The input module 150 may receive an instruction or data to be used by a component of the electronic device 101 (e.g., the processor 120) from outside of the electronic device 101 (e.g., a user). The input module 150 may include, e.g., a microphone, a mouse, a keyboard, a key (e.g., a button), or a digital pen (e.g., a stylus pen).

The sound output module 155 may output a sound signal to outside of the electronic device 101. The sound output module 155 may include, e.g., a speaker or a receiver. The speaker may be used for general purposes such as multimedia playback or recording playback. The receiver may be used for receiving an incoming call. According to an embodiment, the receiver may be implemented separately from, or as part of, the speaker.

The display module 160 may visually provide information to outside of the electronic device 101 (e.g., a user). The display module 160 may include, e.g., a display, a hologram device, or a projector, and a control circuit for controlling the device. According to an embodiment, the display module 160 may include a touch sensor configured to detect a touch, or a pressure sensor configured to measure an intensity of a force generated by the touch.

The audio module 170 may convert a sound into an electrical signal, or conversely, convert an electrical signal into a sound. According to an embodiment, the audio module 170 may obtain a sound through the input module 150, or may output a sound through the sound output module 155 or an external electronic device (e.g., the electronic device 102) (e.g., a speaker or a headphone) directly or wirelessly connected to the electronic device 101.

The sensor module 176 may detect an operational state (e.g., power or temperature) of the electronic device 101 or an environmental state (e.g., a user state) external to the electronic device 101, and generate an electrical signal or data value corresponding to the detected state. According to an embodiment, the sensor module 176 may include, e.g., a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols that may be used for the electronic device 101 to be directly or wirelessly connected to an external electronic device (e.g., the electronic device 102). According to an embodiment, the interface 177 may include, e.g., a high definition multimedia interface (HDMI), a universal serial bus (USB) interface, an SD card interface, or an audio interface.

The connecting terminal 178 may include a connector through which the electronic device 101 may be physically connected to an external electronic device (e.g., the electronic device 102). According to an embodiment, the connecting terminal 178 may include, e.g., an HDMI connector, a USB connector, an SD card connector, or an audio connector (e.g., a headphone connector).

The haptic module 179 may convert an electrical signal into a mechanical stimulus (e.g., vibration or movement) or an electrical stimulus that a user may perceive through a tactile sensation or a kinesthetic sensation. According to an embodiment, the haptic module 179 may include, e.g., a motor, a piezoelectric element, or an electrical stimulation device.

The camera module 180 may capture a still image and a video. According to an embodiment, the camera module 180 may include one or more lenses, image sensors, image signal processors, or flashes.

The power management module 188 may manage power supplied to the electronic device 101. According to an embodiment, the power management module 188 may be implemented as, e.g., at least part of a power management integrated circuit (PMIC).

The battery 189 may supply power to at least one component of the electronic device 101. According to an embodiment, the battery 189 may include, e.g., a non-rechargeable primary cell, a rechargeable secondary cell, or a fuel cell.

The communication module 190 may support establishing a direct (e.g., wired) communication channel or a wireless communication channel between the electronic device 101 and an external electronic device (e.g., the electronic device 102, the electronic device 104, or the server 108), and performing communication through the established communication channel. The communication module 190 may include one or more communication processors that operate independently from the processor 120 (e.g., an application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication module). A corresponding communication module among these communication modules may communicate with the external electronic device 104 through a first network 198 (e.g., a short-range communication network such as Bluetooth, wireless fidelity (Wi-Fi) direct, or infrared data association (IrDA)) or a second network 199 (e.g., a long-range communication network such as a legacy cellular network, a 5G network, a next-generation communication network, the Internet, or a computer network (e.g., a LAN or a WAN)). These various types of communication modules may be integrated into a single component (e.g., a single chip) or may be implemented as a plurality of separate components (e.g., a plurality of chips). The wireless communication module 192 may identify or authenticate the electronic device 101 within a communication network such as the first network 198 or the second network 199 using subscriber information (e.g., international mobile subscriber identity (IMSI)) stored in a subscriber identification module 196.

The wireless communication module 192 may support a 5G network after a 4G network and next-generation communication technology, e.g., new radio access technology (NR access technology). The NR access technology may support high-speed transmission of high-capacity data (enhanced mobile broadband (eMBB)), minimization of terminal power and access of multiple terminals (massive machine type communications (mMTC)), or high reliability and low latency (ultra-reliable and low-latency communications (URLLC)). The wireless communication module 192 may support a high-frequency band (e.g., a mmWave band), e.g., for achieving a high data transmission rate. The wireless communication module 192 may support various technologies for securing performance in the high-frequency band, e.g., technologies such as beamforming, massive multiple-input and multiple-output (massive MIMO), full dimensional MIMO (FD-MIMO), array antenna, analog beam-forming, or large scale antenna. The wireless communication module 192 may support various requirements specified by the electronic device 101, an external electronic device (e.g., the electronic device 104), or a network system (e.g., the second network 199). According to an embodiment, the wireless communication module 192 may support a peak data rate (e.g., 20 Gbps or more) for eMBB realization, loss coverage (e.g., 164 dB or less) for mMTC realization, or U-plane latency (e.g., 0.5 ms or less for each of downlink (DL) and uplink (UL), or round trip 1 ms or less) for URLLC realization.

The antenna module 197 may transmit a signal or power to an external source (e.g., an external electronic device) or receive a signal or power from an external source. According to an embodiment, the antenna module 197 may include an antenna including a radiator formed of a conductor or a conductive pattern formed on a substrate (e.g., a PCB). According to an embodiment, the antenna module 197 may include a plurality of antennas (e.g., an array antenna). In this case, at least one antenna suitable for a communication scheme used in a communication network such as the first network 198 or the second network 199 may be selected from the plurality of antennas by, e.g., the communication module 190. A signal or power may be transmitted or received between the communication module 190 and an external electronic device through the selected at least one antenna. According to an embodiment, another component (e.g., a radio frequency integrated circuit (RFIC)) in addition to the radiator may be additionally formed as part of the antenna module 197.

According to various embodiments, the antenna module 197 may form a mmWave antenna module. According to an embodiment, the mmWave antenna module may include a printed circuit board, an RFIC disposed on or adjacent to a first surface (e.g., a lower surface) of the printed circuit board and capable of supporting a designated high-frequency band (e.g., a mmWave band), and a plurality of antennas (e.g., an array antenna) disposed on or adjacent to a second surface (e.g., an upper surface or a side surface) of the printed circuit board and capable of transmitting or receiving a signal of the designated high-frequency band.

At least some of the components may be connected to each other through a communication scheme between peripheral devices (e.g., a bus, general purpose input and output (GPIO), serial peripheral interface (SPI), or mobile industry processor interface (MIPI)) and may exchange a signal (e.g., a command or data) with each other.

According to an embodiment, a command or data may be transmitted or received between the electronic device 101 and the external electronic device 104 through a server 108 connected to the second network 199. Each of the external electronic devices 102 or 104 may be a device of the same type as or a different type from the electronic device 101. According to an embodiment, all or some of operations executed in the electronic device 101 may be executed in one or more external electronic devices among the external electronic devices 102, 104, or 108. For example, in case that the electronic device 101 is required to perform a predetermined function or service automatically or in response to a request from a user or another device, the electronic device 101 may request one or more external electronic devices to perform at least part of the function or the service instead of, or in addition to, executing the function or service by itself. The one or more external electronic devices that receive the request may execute at least part of the requested function or service, or an additional function or service related to the request, and may transmit a result of the execution to the electronic device 101. The electronic device 101 may provide the result, as it is or after additionally processing the result, as at least part of a response to the request. For this purpose, e.g., cloud computing, distributed computing, mobile edge computing (MEC), or client-server computing technology may be used. The electronic device 101 may provide ultra-low latency services using, e.g., distributed computing or mobile edge computing. In another embodiment, the external electronic device 104 may include an internet of things (IoT) device. The server 108 may be an intelligent server using machine learning and/or neural networks. According to an embodiment, the external electronic device 104 or the server 108 may be included in the second network 199. The electronic device 101 may be applied to intelligent services (e.g., smart home, smart city, smart car, or healthcare) based on 5G communication technology and IoT-related technology.

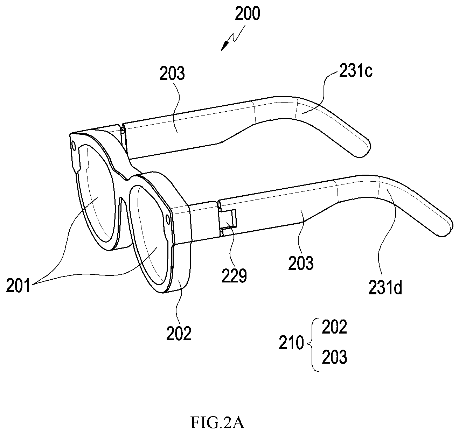

FIG. 2A is a perspective view illustrating a wearable device 200 according to various embodiments of the disclosure.

Referring to FIG. 2A, the wearable device 200 is an electronic device in a glasses form, and a user may visually perceive surrounding objects or environments while wearing the wearable device 200. For example, the wearable device 200 may be a head mounting device (HMD) or smart glasses capable of providing an image directly in front of the user's eyes. The configuration of the wearable device 200 of FIG. 2A may be the same in whole or part as the configuration of the electronic device 101 of FIG. 1.

According to various embodiments, the wearable device 200 may include a housing 210 forming an exterior of the wearable device 200. The housing 210 may provide a space in which components of the wearable device 200 may be disposed. For example, the housing 210 may include a lens frame 202 and at least one wearing member 203.

According to various embodiments, the wearable device 200 may include a display member 201 capable of providing visual information to a user. For example, the display member 201 may include a module equipped with a lens, a display, a waveguide, and/or a touch circuit. According to an embodiment, the display member 201 may be formed to be transparent or semi-transparent. According to an embodiment, the display member 201 may include a semi-transparent material glass or a window member whose light transmittance may be adjusted as a tinting concentration is adjusted. According to an embodiment, a pair of display members 201 may be provided and may be disposed to respectively correspond to the left eye and the right eye of a user in a state in which the wearable device 200 is worn on the user's body.

According to various embodiments, the lens frame 202 may receive at least a portion of the display member 201. For example, the lens frame 202 may surround at least a portion of an edge of the display member 201. According to an embodiment, the lens frame 202 may position at least one of the display members 201 correspondingly to the user's eyes. According to an embodiment, the lens frame 202 may be a rim of a general glasses structure. According to an embodiment, the lens frame 202 may include at least one closed curve surrounding the display member 201.

According to various embodiments, the wearing member 203 may extend from the lens frame 202. For example, the wearing member 203 may extend from an end portion of the lens frame 202 and may be supported on or positioned on the user's body (e.g., ears) together with the lens frame 202. According to an embodiment, the wearing member 203 may be rotatably coupled to the lens frame 202 through a hinge structure 229. According to an embodiment, the wearing member 203 may include an inner side surface 231c configured to face the user's body and an outer side surface 231d opposite to the inner side surface.

According to various embodiments, the wearable device 200 may include a hinge structure 229 configured to allow the wearing member 203 to be folded with respect to the lens frame 202. The hinge structure 229 may be disposed between the lens frame 202 and the wearing member 203. In a state in which the wearable device 200 is not worn, a user may fold the wearing member 203 so as to partially overlap the lens frame 202 for carrying or storing.

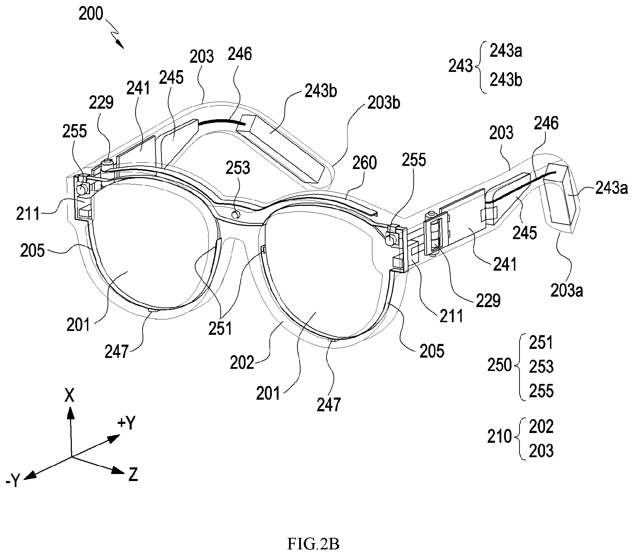

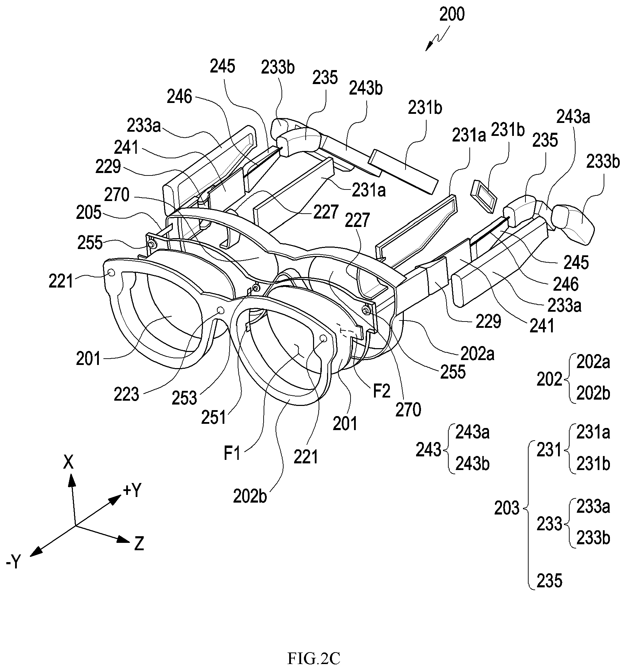

FIG. 2B is a perspective view illustrating an internal configuration of a wearable device according to an embodiment of the disclosure. FIG. 2C is an exploded perspective view illustrating a wearable device according to an embodiment of the disclosure.

Referring to FIGS. 2B and 2C, the wearable device 200 may include components received in the housing 210 (e.g., at least one circuit board 241 (e.g., a printed circuit board (PCB), a printed board assembly (PBA), a flexible PCB (FPCB), or a rigid-flexible PCB (RFPCB)), at least one battery 243, at least one speaker module 245, at least one power transmission structure 246, and/or a camera module 250). The configuration of the housing 210 of FIG. 2B may be identical in whole or part to the configuration of the display member 201, the lens frame 202, the wearing member 203, and the hinge structure 229 of FIG. 2A.

According to various embodiments, the wearable device 200 may acquire and/or recognize visual images regarding objects or environments in a direction (e.g., -Y direction) that the user is looking at or that the wearable device 200 is directed toward using the camera module 250 (e.g., the camera module 180 of FIG. 1), and may receive information regarding the objects or environments from an external electronic device (e.g., the electronic device 102, 104 or the server 108 of FIG. 1) through a network (e.g., the first network 198 or the second network 199 of FIG. 1). In an embodiment, the wearable device 200 may provide received information regarding the objects or environments to the user in an audio or visual form. The wearable device 200 may provide received information regarding the objects or environments to the user through the display member 201 in a visual form using a display module (e.g., the display module 160 of FIG. 1). For example, the wearable device 200 may implement information regarding the objects or environments in a visual form and combine the information with a real image of the user's surrounding environment, thereby implementing augmented reality. A camera module 250 of the wearable device 200 according to an embodiment of the disclosure may be directed toward a user wearing the wearable device 200 to acquire an image of at least a portion of the user's body (e.g., an upper body including the user's face). For this purpose, the camera module 250 according to an embodiment of the disclosure may be disposed in a direction facing a portion of the user's body.

According to various embodiments, the display member 201 may include a first surface F1 facing a direction (e.g., -Y direction) from which external light is incident and a second surface F2 facing a direction (e.g., +Y direction) opposite to the first surface F1. In a state in which the user wears the wearable device 200, at least a portion of light or an image incident through the first surface F1 may pass through the second surface F2 of the display member 201 disposed facing the user's left eye and/or right eye and may be incident on the user's left eye and/or right eye.

According to various embodiments, the lens frame 202 may include at least two or more frames. For example, the lens frame 202 may include a first frame 202a and a second frame 202b. According to an embodiment, when the user wears the wearable device 200, the first frame 202a may be a portion of the frame facing the user's face, and the second frame 202b may be a portion of the lens frame 202 spaced apart from the first frame 202a in a gaze direction (e.g., -Y direction) that the user is looking at.

According to various embodiments, a light output module 211 may provide an image and/or video to the user. For example, the light output module 211 may include a display panel (not illustrated) capable of outputting video and a lens (not illustrated) corresponding to the user's eyes and guiding the video to the display member 201. For example, the user may acquire video output from the display panel of the light output module 211 through the lens of the light output module 211. According to various embodiments, the light output module 211 may include a device configured to display various information. For example, the light output module 211 may include at least one of a liquid crystal display (LCD), a digital mirror device (DMD), a liquid crystal on silicon (LCoS), an organic light emitting diode (OLED), or a micro light emitting diode (micro LED). According to an embodiment, in case that the light output module 211 and/or the display member 201 includes one of an LCD, DMD, or LCoS, the wearable device 200 may include a light source that radiates light onto a display area of the light output module 211 and/or the display member 201. According to an embodiment, in case that the light output module 211 and/or the display member 201 includes one of an OLED or micro LED, the wearable device 200 may provide a virtual image to the user without including a separate light source.

According to various embodiments, at least a portion of the light output module 211 may be disposed within the housing 210. For example, the light output module 211 may be disposed on the wearing member 203 or the lens frame 202 to respectively correspond to the right eye and left eye of the user. According to an embodiment, the light output module 211 may be connected to the display member 201 and may provide video to the user through the display member 201.

According to various embodiments, the circuit board 241 may include components for driving the wearable device 200. For example, the circuit board 241 may include at least one integrated circuit chip, and at least one of the processor 120, the memory 130, the power management module 188, or the communication module 190 of FIG. 1 may be provided on the integrated circuit chip. According to an embodiment, the circuit board 241 may be disposed within the wearing member 203 of the housing 210. According to an embodiment, the circuit board 241 may be electrically connected to the battery 243 through the power transmission structure 246. According to an embodiment, the circuit board 241 may be connected to a flexible printed circuit board 205 and may transmit electrical signals to electronic components of the electronic device (e.g., the light output module 211, the camera module 250, and a light emitting unit) through the flexible printed circuit board 205. According to an embodiment, the circuit board 241 may be a circuit board including an interposer.

According to various embodiments, the flexible printed circuit board 205 may extend from the circuit board 241 across the hinge structure 229 into the interior of the lens frame 202 and may be disposed around at least a portion of the periphery of the display member 201 within the lens frame 202.

According to various embodiments, the battery 243 (e.g., the battery 189 of FIG. 1) may be electrically connected to components of the wearable device 200 (e.g., the light output module 211, the circuit board 241, the speaker module 245, the microphone module 247, and/or the camera module 250) and may supply power to the components of the wearable device 200.

According to various embodiments, at least a portion of the battery 243 may be disposed on the wearing member 203. According to an embodiment, the battery 243 may be disposed at an end portion 203a, 203b of the wearing member 203. For example, the battery 243 may include a first battery 243a disposed at a first end portion 203a of the wearing member 203 and a second battery 243b disposed at a second end portion 203b.

According to various embodiments, the speaker module 245 (e.g., the audio module 170 or the sound output module 155 of FIG. 1) may convert an electrical signal into sound. At least a portion of the speaker module 245 may be disposed within the wearing member 203 of the housing 210. According to an embodiment, the speaker module 245 may be positioned within the wearing member 203 to correspond to the user's ear. For example, the speaker module 245 may be disposed between the circuit board 241 and the battery 243.

According to various embodiments, the power transmission structure 246 may transmit power of the battery 243 to electronic components of the wearable device 200 (e.g., the light output module 211). For example, the power transmission structure 246 may be electrically connected to the battery 243 and/or the circuit board 241, and the circuit board 241 may transmit power received through the power transmission structure 246 to the light output module 211. According to an embodiment, the power transmission structure 246 may pass the speaker module 245 and be connected to the circuit board 241. For example, when the wearable device 200 is viewed from a side (e.g., Z-axis direction), the power transmission structure 246 may at least partially overlap the speaker module 245.

According to various embodiments, the power transmission structure 246 may be a component for transmitting power. For example, the power transmission structure 246 may include a flexible printed circuit board or a wire. For example, the wire may include a plurality of cables (not illustrated). In various embodiments, the form of the power transmission structure 246 may be variously modified considering the number and/or type of cables.

According to various embodiments, the microphone module 247 (e.g., the input module 150 and/or the audio module 170 of FIG. 1) may convert sound into an electrical signal. According to an embodiment, the microphone module 247 may be disposed on at least a portion of the lens frame 202. For example, at least one microphone module 247 may be disposed on a lower portion (e.g., a direction facing -X axis) and/or an upper portion (e.g., a direction facing X axis) of the wearable device 200. According to various embodiments, the wearable device 200 may more clearly recognize the user's voice using voice information (e.g., sound) acquired from at least one microphone module 247. For example, the wearable device 200 may distinguish voice information from surrounding noise based on the acquired voice information and/or additional information (e.g., low-frequency vibrations of the user's skin and bones). For example, the wearable device 200 may clearly recognize the user's voice and may perform a function of reducing surrounding noise (e.g., noise canceling). The microphone module 247 according to various embodiments of the disclosure may include a plurality of microphone modules 247 for performing beamforming. The microphone module 247 according to various embodiments of the disclosure may include an omnidirectional or directional microphone.

According to various embodiments, the camera module 250 may capture still images and/or videos. The camera module 250 may include a lens, at least one image sensor, an image signal processor, or a flash. According to an embodiment, the camera module 250 may be disposed within the lens frame 202 and may be disposed around the display member 201.

According to various embodiments, the camera module 250 may include at least one first camera module 251. According to an embodiment, the first camera module 251 may capture the user's eye (e.g., pupil) or a trajectory of a gaze. For example, the first camera module 251 may capture a reflection pattern of light radiated by a light emitting unit to the user's eye. For example, the light emitting unit may radiate light in an infrared band for tracking a trajectory of a gaze using the first camera module 251. For example, the light emitting unit may include an IR LED. According to an embodiment, a processor (e.g., the processor 120 of FIG. 1) may adjust a position of a virtual image projected on the display member 201 so that the virtual image corresponds to a direction in which the user's pupil is gazing. According to an embodiment, the first camera module 251 may include a global shutter (GS) type camera and may track the user's eye or a trajectory of a gaze using a plurality of first camera modules 251 of the same specifications and performance. At least one first camera module 521 according to an embodiment of the disclosure may be configured to capture the user's face including the user's eyes and/or another body part (e.g., an upper body) of the user.

According to various embodiments, the first camera module 251 may periodically or aperiodically transmit information related to the user's eye or a trajectory of a gaze (e.g., trajectory information) to the processor (e.g., the processor 120 of FIG. 1). According to an embodiment, the first camera module 251 may transmit the trajectory information to the processor when it detects that the user's gaze has changed (e.g., the eye has moved beyond a reference value in a state in which the head is not moving) based on the trajectory information.

According to various embodiments, the camera module 250 may include a second camera module 253. According to an embodiment, the second camera module 253 may capture an external image. According to an embodiment, the second camera module 253 may be a global shutter type or a rolling shutter (RS) type camera. According to an embodiment, the second camera module 253 may capture an external image through a second optical hole 223 formed in the second frame 202b. For example, the second camera module 253 may include a high-resolution color camera and may be an HR (high resolution) or PV (photo video) camera. Further, the second camera module 253 may provide an auto focus (AF) function and an optical image stabilizer (OIS) function. The second camera module 253 according to an embodiment of the disclosure may include an infrared (IR) camera (e.g., a time of flight (TOF) camera or a structured light camera). For example, the IR camera may be operated as at least a portion of a sensor module (e.g., the sensor module 176 of FIG. 1) for detecting a distance to a subject.

According to various embodiments, the wearable device 200 may include a flash (not illustrated) positioned adjacent to the second camera module 253. For example, the flash (not illustrated) may provide light for increasing brightness (e.g., illuminance) around the wearable device 200 when the second camera module 253 acquires an external image and may reduce difficulty in image acquisition due to a dark environment, mixing of various light sources, and/or reflection of light.

According to various embodiments, the camera module 250 may include at least one third camera module 255. According to an embodiment, the third camera module 255 may capture a user's motion through a first optical hole 221 formed in the lens frame 202. For example, the third camera module 255 may capture the user's gesture (e.g., hand motion). The third camera module 255 and/or the first optical hole 221 may be disposed at both side ends of the lens frame 202 (e.g., the second frame 202b), e.g., at two opposite ends of the lens frame 202 (e.g., the second frame 202b) in the X direction. According to an embodiment, the third camera module 255 may be a global shutter (GS) type camera. For example, the third camera module 255 may be a camera supporting 3DoF (degrees of freedom) or 6DoF to provide 360-degree space (e.g., all directions), position recognition, and/or movement recognition. According to an embodiment, the third camera module 255 may be a stereo camera and may perform simultaneous localization and mapping (SLAM) function and user movement recognition function using a plurality of global shutter type cameras of the same specifications and performance. According to an embodiment, the third camera module 255 may include an IR camera (e.g., a TOF camera or a structured light camera). For example, the IR camera may be operated as at least a portion of a sensor module (e.g., the sensor module 176 of FIG. 1) for detecting a distance to a subject. The third camera module 255 according to an embodiment of the disclosure may be configured and/or disposed to capture a portion of the user's body (e.g., around the user's mouth). The third camera module 255 according to an embodiment of the disclosure may be disposed to face downward (e.g., toward the ground) when the wearable device 200 is worn by the user. Accordingly, when the wearable device 200 is worn by the user, the user's gesture may be detected through the third camera module 255.

According to an embodiment, at least one of the first camera module 251 or the third camera module 255 may be replaced with a sensor module (e.g., the sensor module 176 of FIG. 1) (e.g., a LiDAR (light detection and ranging) sensor). For example, the sensor module may include at least one of a VCSEL (vertical cavity surface emitting laser), an infrared sensor, and/or a photodiode. For example, the photodiode may include a PIN (positive intrinsic negative) photodiode or an APD (avalanche photo diode). The photodiode may be referred to as a photo detector or a photo sensor.

According to an embodiment, at least one of the first camera module 251, the second camera module 253, or the third camera module 255 may include a plurality of camera modules (not illustrated). For example, the second camera module 253 may be configured with a plurality of lenses (e.g., wide-angle and telephoto lenses) and image sensors and may be disposed on one surface (e.g., a surface facing -Y axis) of the wearable device 200. For example, the wearable device 200 may include a plurality of camera modules each having different attributes (e.g., viewing angle) or functions and may control the viewing angle of the camera module to change based on a user selection and/or trajectory information. For example, at least one of the plurality of camera modules may be a wide-angle camera, and at least another one may be a telephoto camera.

According to various embodiments, the processor (e.g., the processor 120 of FIG. 1) may determine movement of the wearable device 200 and/or movement of the user using information of the wearable device 200 acquired using at least one of a gesture sensor, a gyro sensor, or an acceleration sensor of the sensor module (e.g., the sensor module 176 of FIG. 1) and a motion of the user (e.g., approach of the user's body toward the wearable device 200) acquired using the second camera module 253. According to an embodiment, the wearable device 200 may include a magnetic (geomagnetic) sensor capable of measuring orientation using magnetic field and magnetic lines, and/or a Hall sensor capable of acquiring movement information (e.g., movement direction or movement distance) using magnetic field strength, in addition to the described sensors. For example, the processor may determine movement of the wearable device 200 and/or movement of the user based on information acquired from the magnetic (geomagnetic) sensor and/or the Hall sensor.

According to various embodiments (not illustrated), the wearable device 200 may perform an input function (e.g., touch and/or pressure sensing function) capable of interaction with the user. For example, a component configured to perform the touch and/or pressure sensing function (e.g., a touch sensor and/or a pressure sensor) may be disposed on at least a portion of the wearing member 203. The wearable device 200 may control a virtual image output through the display member 201 based on information acquired through the component. For example, a sensor related to the touch and/or pressure sensing function may be configured in various ways such as a resistive type, a capacitive type, an electro-magnetic type (EM), or an optical type. According to an embodiment, the component configured to perform the touch and/or pressure sensing function may be identical in whole or part to the configuration of the input module 150 of FIG. 1.

According to various embodiments, the wearable device 200 may include a reinforcing member 260 disposed in an inner space of the lens frame 202 and formed to have a rigidity higher than that of the lens frame 202.

According to various embodiments, the wearable device 200 may include a lens structure 270. The lens structure 270 may refract at least a portion of light. For example, the lens structure 270 may be a prescription lens having refractive power. According to an embodiment, the lens structure 270 may be disposed behind the second window member of the display member 201 (e.g., +Y direction). For example, the lens structure 270 may be positioned between the display member 201 and the user's eye. For example, the lens structure 270 may face the display member.

According to various embodiments, the housing 210 may include a hinge cover 227 capable of concealing a portion of the hinge structure 229. Another portion of the hinge structure 229 may be received or concealed between an inner case 231 and an outer case 233 described below.

According to various embodiments, the wearing member 203 may include an inner case 231 and an outer case 233. The inner case 231 may be, e.g., a case configured to face the user's body or directly contact the user's body, and may be formed of a material having low thermal conductivity, e.g., a synthetic resin. According to an embodiment, the inner case 231 may include an inner side surface (e.g., the inner side surface 231c of FIG. 2A) facing the user's body. The outer case 233 may include, e.g., a material capable of at least partially transmitting heat (e.g., a metal material) and may be coupled to face the inner case 231. According to an embodiment, the outer case 233 may include an outer side surface (e.g., the outer side surface 231d of FIG. 2A) opposite to the inner side surface 231c. In an embodiment, at least one of the circuit board 241 or the speaker module 245 may be received in a space separated from the battery 243 within the wearing member 203. In the illustrated embodiment, the inner case 231 may include a first case 231a receiving the circuit board 241 or the speaker module 245, and a second case 231b receiving the battery 243, and the outer case 233 may include a third case 233a coupled to face the first case 231a, and a fourth case 233b coupled to face the second case 231b. For example, the first case 231a and the third case 233a may be coupled (hereinafter, 'first case portion 231a, 233a') to receive the circuit board 241 and/or the speaker module 245, and the second case 231b and the fourth case 233b may be coupled (hereinafter, 'second case portion 231b, 233b') to receive the battery 243.

According to various embodiments, the first case portion 231a, 233a may be rotatably coupled to the lens frame 202 through the hinge structure 229, and the second case portion 231b, 233b may be connected or mounted to an end portion of the first case portion 231a, 233a through a connecting member 235. In some embodiments, a portion of the connecting member 235 that contacts the user's body may be formed of an elastomeric material having low thermal conductivity, e.g., silicone, polyurethane, or rubber, and a portion that does not contact the user's body may be formed of a material having high thermal conductivity (e.g., a metal material). For example, when heat is generated from the circuit board 241 or the battery 243, the connecting member 235 may block heat from being transmitted to a portion contacting the user's body and may dissipate or discharge heat through a portion not contacting the user's body. According to an embodiment, a portion of the connecting member 235 configured to contact the user's body may be interpreted as a portion of the inner case 231, and a portion of the connecting member 235 not contacting the user's body may be interpreted as a portion of the outer case 233. According to an embodiment (not illustrated), the first case 231a and the second case 231b may be integrally configured without the connecting member 235, and the third case 233a and the fourth case 233b may be integrally configured without the connecting member 235. According to various embodiments, in addition to the illustrated components, another component (e.g., the antenna module 197 of FIG. 1) may be further included, and information regarding objects or environments may be received from an external electronic device (e.g., the electronic device 102, 104 or the server 108 of FIG. 1) through a network (e.g., the first network 198 or the second network 199 of FIG. 1) using the communication module 190.

In FIGS. 2A to 2C, only the wearable device 200 has been illustrated and described, but the disclosure is not limited thereto, and some configurations of the wearable device 200 illustrated in FIGS. 2A to 2C may also be included in electronic devices such as smartphones and tablet PCs.

The wearable device 200 according to various embodiments of the disclosure may identify whether a user 210 is wearing the wearable device 100 through a proximity sensor included in the wearable device 200. Alternatively, the wearable device 200 according to various embodiments of the disclosure may determine whether the wearable device 200 is worn by a user 610 through an angle sensor provided in a hinge portion of the wearable device 200, according to whether a frame of the wearable device 200 is unfolded (e.g., in an unfolded state) and whether proximity of the user 610 is detected while the frame of the wearable device 200 is unfolded.

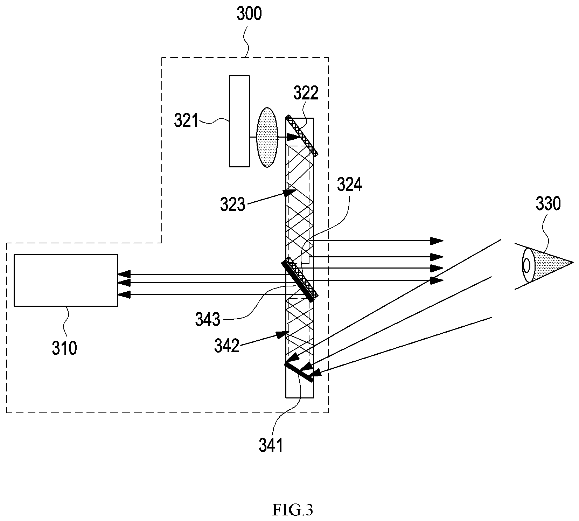

FIG. 3 illustrates an eye tracking camera structure of a wearable device according to various embodiments. Referring to FIG. 3, a wearable device 300 (e.g., a glasses-type device) may include an ET (eye tracking) camera 310, a display 321, an input optical member 322, a first waveguide 323, an output optical member 324, a first splitter 341, a second waveguide 342, and a second splitter 343.

According to various embodiments, the user's pupil 330 may be captured by the ET camera 310 through the first splitter 341 (e.g., a gaze tracking splitter), the second waveguide 342, and the second splitter 343. The ET camera 310 may detect the pupil 330 in the captured image and track the user's gaze by identifying movement of the detected pupil 330.

According to various embodiments, an image output through the display 321 may be reflected through the input optical member 322 and the first waveguide 323 and may be displayed through the output optical member 324. The wearable device 300 may track the user's gaze by identifying movement of the user's pupil 330 while outputting an image through the display 321.

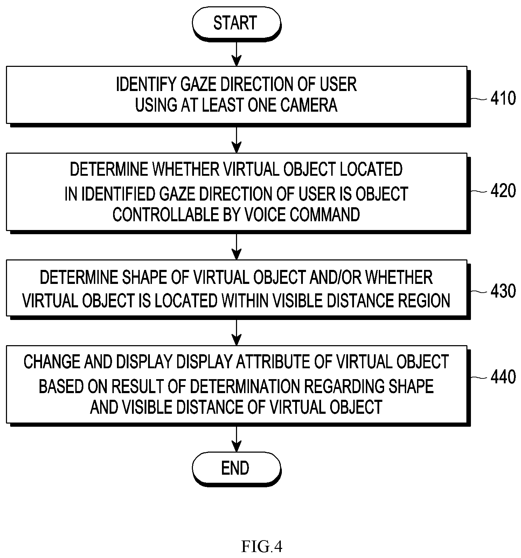

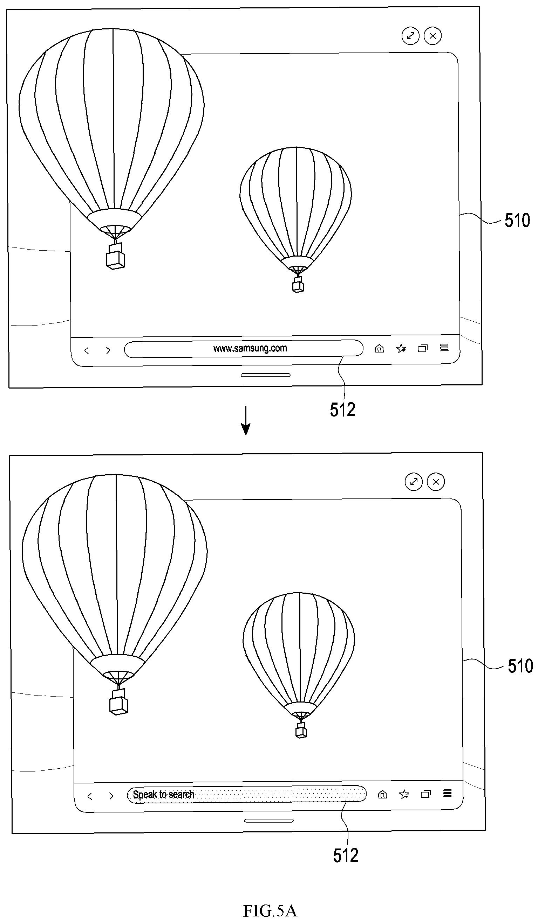

FIG. 4 is an example view illustrating a function or operation in which the wearable device 200 changes and displays a display attribute of a virtual object (e.g., the first virtual object (510 of FIG. 5A)) based on a shape of a virtual object (e.g., the first virtual object 510) (e.g., whether the shape is two-dimensional or three-dimensional) and a visible distance according to an embodiment of the disclosure.

Referring to FIG. 4, the wearable device 200 according to an embodiment of the disclosure may acquire gaze information of a user in operation 410. For example, the wearable device 200 according to an embodiment of the disclosure may identify a gaze direction of a user using at least one camera (e.g., the camera module 250 of FIG. 2B). The wearable device 200 according to an embodiment of the disclosure may identify the gaze direction of the user using a camera module capable of tracking the user's gaze. The wearable device 200 according to an embodiment of the disclosure may acquire gaze information (e.g., track the gaze direction) using a pupil-corneal reflection method. The pupil-corneal reflection method according to an embodiment of the disclosure may include a method of detecting the gaze direction based on a pattern of the pupil and a glint pattern that is a reflected light of the cornea. The wearable device 200 according to an embodiment of the disclosure may acquire gaze information of the user (e.g., track the gaze direction) through image analysis of the boundary line pattern of the pupil or iris of the eye.

The wearable device 200 according to an embodiment of the disclosure may determine whether a virtual object located in the gaze direction of the user is an object controllable by voice command in operation 420. The wearable device 200 according to an embodiment of the disclosure may determine whether the virtual object may be controlled by voice command based on metadata stored in association with the virtual object and/or an application corresponding to the virtual object. The metadata according to an embodiment of the disclosure may include an identifier (e.g., a flag value) indicating whether the virtual object may be controlled by voice. The wearable device 200 according to an embodiment of the disclosure may determine whether the virtual object located in the gaze direction of the user is an object controllable by voice command based on a value (e.g., 0 or 1) of the identifier included in the metadata. Alternatively, the wearable device 200 according to an embodiment of the disclosure may transmit information about a virtual object currently located in the gaze direction of the user to an external electronic device (e.g., server) and may acquire a response including information on whether the virtual object currently located in the gaze direction of the user is controllable by voice from the external electronic device. The wearable device 200 according to an embodiment of the disclosure may determine whether the virtual object currently located in the gaze direction of the user is controllable by voice based on the response acquired from the external electronic device. Alternatively, the wearable device 200 according to an embodiment of the disclosure may determine whether the virtual object located in the gaze direction of the user is an object controllable by voice command using a look-up table defining a correspondence relationship between an application corresponding to the virtual object and an identifier indicating whether voice command control is possible, which is pre-stored in the wearable device 200.

The wearable device 200 according to an embodiment of the disclosure may determine a type of the real object and determine whether the real object may be controlled by voice command based on the determined type in case that the user's gaze is directed toward a real object rather than a virtual object. For example, the wearable device 200 according to an embodiment of the disclosure may determine whether pairing with the electronic device is possible in case that the real object is an electronic device. The wearable device 200 according to an embodiment of the disclosure may determine that pairing is possible, e.g., when a real object located in a direction in which the user's gaze is directed is a device registered according to the same account as the wearable device 200. The wearable device 200 according to an embodiment of the disclosure may identify an electronic device that may be paired as an electronic device controllable by voice command when determining that pairing with the electronic device is possible. For example, the wearable device 200 according to an embodiment of the disclosure may request the electronic device (e.g., a laptop) to turn off the power of the electronic device (e.g., a laptop) when a voice command "turn off laptop power" is acquired in a state in which the device is paired with the electronic device (e.g., a laptop). According to an embodiment of the disclosure, in response to such a request, the electronic device (e.g., a laptop) may be controlled to turn off the power of the electronic device. The wearable device 200 according to an embodiment of the disclosure may provide a designated visual effect (e.g., a border having a designated color) around the real object when determining that pairing is possible. Alternatively, according to an embodiment of the disclosure, even when pairing between the wearable device 200 and the electronic device (e.g., a laptop) is possible, when voice control authority is blocked through at least one device, control through voice command may not be possible for the at least one device. In such a case, the wearable device 200 according to an embodiment of the disclosure may not provide a visual effect (e.g., a border having a designated color) around the electronic device.

The wearable device 200 according to an embodiment of the disclosure may determine whether visual processing is possible to deform the shape of the real object or to make it invisible in the user's field of view in case that the real object is not an electronic device such as a chair. The wearable device 200 according to an embodiment of the disclosure may determine, e.g., using a trained artificial intelligence model, whether visual processing is possible to deform the shape of the real object or to make it invisible in the user's field of view. The wearable device 200 according to an embodiment of the disclosure may provide a designated visual effect around the real object when determining that the real object that is not an electronic device is controllable.

The wearable device 200 according to an embodiment of the disclosure may determine a shape of the virtual object and/or whether the virtual object is located within a visible distance region in operation 430. Operation 430 according to an embodiment of the disclosure may be performed regardless of whether at least one object is an object controllable by voice command. For example, the wearable device 200 according to an embodiment of the disclosure may identify and store information about the shape and/or distance of at least one object included within a viewing angle of the wearable device 200 and, in case that the at least one object is identified as an object controllable by voice, may change and display a display attribute of the at least one object. However, operation 430 may also be performed after the at least one object is identified as an object controllable by voice. The wearable device 200 according to an embodiment of the disclosure may determine whether the virtual object has a two-dimensional shape or a three-dimensional shape. The wearable device 200 according to an embodiment of the disclosure may determine whether the virtual object is located within the visible distance region based on an area that the virtual object (e.g., the first virtual object 510) occupies within the viewing angle of the wearable device 200. For example, the wearable device 200 according to an embodiment of the disclosure may determine that the virtual object is located outside the visible distance region in case that the virtual object occupies less than 10% of the viewing angle area. However, the wearable device 200 according to an embodiment of the disclosure may perform operation 430 while omitting the function or operation of determining whether the object is located within the visible distance region in operation 430. In this case, in operation 440, the wearable device 400 according to an embodiment of the disclosure may change and display the display attribute according to the attribute of the object determined to have been gazed at by the user, regardless of whether the virtual object is located within the visible distance region.

The wearable device 200 according to an embodiment of the disclosure may change and display the display attribute of the virtual object based on a result of the determination regarding the shape of the virtual object and/or the visible distance in operation 440. For example, the wearable device 200 according to an embodiment of the disclosure may enlarge the size of the virtual object according to a designated ratio and then provide a visual effect in case that the shape of the virtual object is a two-dimensional shape and the virtual object is located outside the visible distance region.

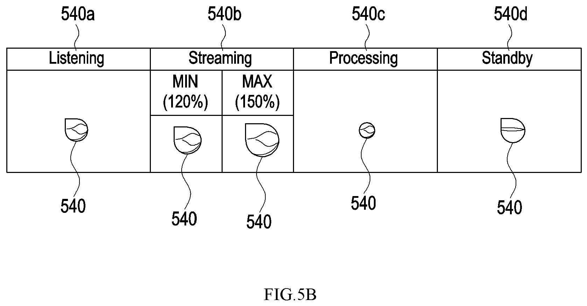

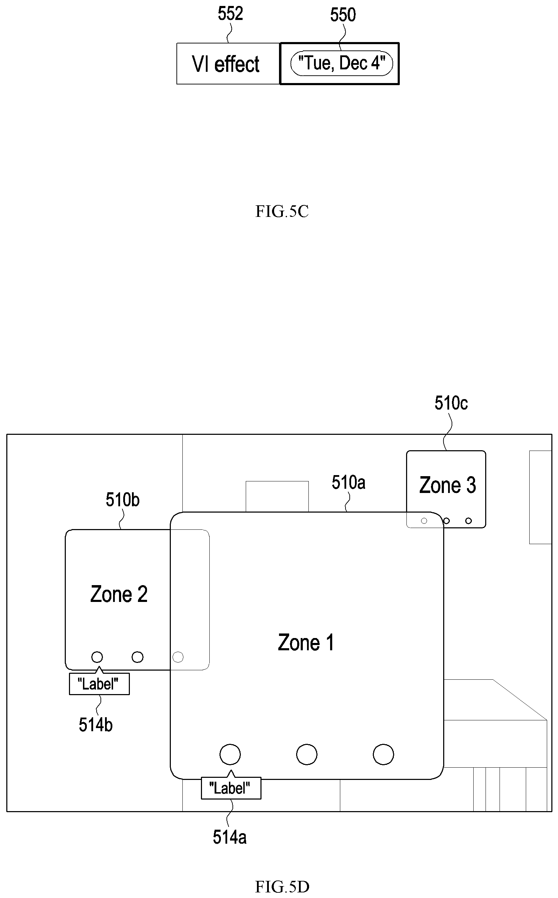

FIG. 5A is an example view illustrating a function or operation of changing and displaying a display attribute of an input field 512 when a virtual object (e.g., the first virtual object 510) includes the input field 512 according to an embodiment of the disclosure. FIG. 5B is an example view illustrating the input field 512 with a changed display attribute according to an embodiment of the disclosure. FIG. 5D is an example view illustrating a function or operation of changing and displaying a display attribute of the input field 512 when a virtual object (e.g., the first virtual object 510) includes the input field 512 according to an embodiment of the disclosure.

Referring to FIG. 5A, the wearable device 200 according to an embodiment of the disclosure may determine whether the virtual object includes the input field 512. The wearable device 200 according to an embodiment of the disclosure may change the display attribute of the input field 512 when user input (e.g., a user's gaze) is directed toward the input field 512. The wearable device 200 according to an embodiment of the disclosure may, as an example of changing the display attribute of the input field 512, represent the color of the input field 512 in a first designated color (e.g., change from white color to blue color) and provide an utterance hint inside the input field 512. However, the wearable device 200 according to an embodiment of the disclosure may display only the color of the input field 512 in the first designated color without providing the utterance hint. The utterance hint according to an embodiment of the disclosure may include a pre-designated utterance command (e.g., "Show me recent photos!") for an application (e.g., gallery application) corresponding to the virtual object. Alternatively, the utterance hint according to an embodiment of the disclosure may include an utterance command most recently input by the user through an application (e.g., intelligent assistant application) corresponding to the virtual object. Alternatively, the utterance hint according to an embodiment of the disclosure may include at least one recommended utterance command determined according to a designated priority. The wearable device 200 according to an embodiment of the disclosure may control the utterance hint 550 to be displayed while continuously moving in a designated direction. The wearable device 200 according to an embodiment of the disclosure may display an indicator (e.g., the indicator 540 of FIG. 5B) related to user utterance inside the input field 512 with a changed display attribute or outside the input field 512 with a changed display attribute. The wearable device 200 according to an embodiment of the disclosure may display an indicator (e.g., the indicator 540 of FIG. 5B) related to user utterance processing together with the input field 512 with a changed display attribute so as to be related to a user utterance input state. This is described in detail in FIG. 5B below.

FIG. 5B is an example view illustrating an indicator related to user utterance processing displayed by the wearable device 200 according to an embodiment of the disclosure.

Referring to FIG. 5B, the wearable device 200 according to an embodiment of the disclosure may display an indicator 540 related to user utterance input as illustrated in FIG. 5B. The indicator 540 according to an embodiment of the disclosure may have different sizes and/or shapes according to a user utterance processing state. In FIG. 5B, "listening (540a)" may mean a state before acquiring the user's utterance. In the "listening (540a)" state according to an embodiment of the disclosure, the microphone of the wearable device 200 is set to the ON state, or the microphone of the wearable device 200 may be transitioned from the OFF state to the ON state according to a user input. In FIG. 5B, "streaming (540b)" may mean a state in which the user's utterance is being acquired. In the "streaming (540b)" state according to an embodiment of the disclosure, the size and/or shape of the indicator 540 may be displayed while repeatedly changing. In the "streaming (540b)" state according to an embodiment of the disclosure, the wearable device 200 may determine whether a wake word (e.g., "Hi Bixby!") and/or an utterance command (e.g., "Tell me today's weather!") is acquired from the user. In FIG. 5B, 120% and 150% are illustrated as examples of the size of the indicator 540, but these are exemplary illustrating the indicator according to an embodiment of the disclosure. According to an embodiment of the disclosure, the indicator 540 may be displayed with various sizes. In the "streaming (540b)" state according to an embodiment of the disclosure, the microphone of the wearable device 200 may be set to the ON state. In FIG. 5C, "processing (540c)" may mean a state in which the wearable device 200 according to an embodiment of the disclosure has acquired the user's utterance and is processing the user's utterance. The wearable device 200 according to an embodiment of the disclosure may process the acquired user utterance using an artificial intelligence module (e.g., LLM) included in the wearable device 200. Alternatively, the wearable device 200 according to an embodiment of the disclosure may transmit information about the acquired user utterance to an external device (e.g., an LLM server) operatively connected with the wearable device 200 to process the user's utterance and may acquire information about the result from the external device. In the "streaming (540b)" state according to an embodiment of the disclosure, the microphone of the wearable device 200 may maintain the ON state or may be transitioned to the OFF state. In FIG. 5C, "standby (540d)" may mean a state after processing the user's utterance. The wearable device 200 according to an embodiment of the disclosure may provide a result generated by the artificial intelligence module of the wearable device 200 and/or a result acquired from the external server as a response to the user's utterance input. In the "standby (540d)" state according to an embodiment of the disclosure, the microphone of the wearable device 200 may maintain the ON state or may be transitioned to the OFF state. The indicator 540 according to an embodiment of the disclosure may be displayed around the virtual object.

FIG. 5C is an example view illustrating a function or operation in which the wearable device 200 displays an utterance hint 550 displayed within the input field 512 with a changed display attribute according to an embodiment of the disclosure. Referring to FIG. 5C, the wearable device 200 according to an embodiment of the disclosure may provide an utterance hint 550 while providing a visual effect (e.g., VI effect) 552 (e.g., a border having a designated color) around the input field 512. The utterance hint according to an embodiment of the disclosure may be provided when it is identified that a designated virtual object has been gazed at for a designated time (e.g., 5 seconds) or more by the user to provide a recommended utterance command to the user. Alternatively, the utterance hint according to an embodiment of the disclosure may be provided in case that the user's motion is identified but the identified motion is not a pre-designated type of gesture. Alternatively, the utterance hint according to an embodiment of the disclosure may be provided from the time when the virtual object is first displayed, regardless of the designated time and/or input gesture. The utterance hint according to an embodiment of the disclosure may include a pre-designated utterance command (e.g., "Show me recent photos!") for an application (e.g., gallery application) corresponding to the virtual object. Alternatively, the utterance hint according to an embodiment of the disclosure may include an utterance command most recently input by the user through an application (e.g., intelligent assistant application) corresponding to the virtual object. Alternatively, the utterance hint according to an embodiment of the disclosure may include at least one recommended utterance command determined according to a designated priority. The wearable device 200 according to an embodiment of the disclosure may control the utterance hint 550 to be displayed while continuously moving in a designated direction. The wearable device 200 according to an embodiment of the disclosure may provide only the utterance hint 550 without providing the visual effect 552.

FIG. 5D is an example view illustrating a function or operation in which the wearable device 200 determines whether a virtual object (e.g., the second virtual object 510a, the third virtual object 510b, and/or the fourth virtual object 510c) is within a visible distance based on a distance between the virtual object (e.g., the second virtual object 510a, the second virtual object 510b, and/or the second virtual object 510c) and the user according to an embodiment of the disclosure. Referring to FIG. 5D, the wearable device 200 according to an embodiment of the disclosure may determine whether the virtual object is located within the visible distance region based on a ratio of occupying the viewing angle of the wearable device 200. The second virtual object 510a (e.g., an execution screen of a gallery application) according to an embodiment of the disclosure may include a virtual object identified as having the largest ratio of occupying the viewing angle of the wearable device 200 among a plurality of virtual objects. The third virtual object 510b (e.g., an execution screen of a call application) according to an embodiment of the disclosure may include a virtual object identified as occupying substantially an average area of the viewing angle of the wearable device 200 among the plurality of virtual objects. The fourth virtual object 510c (e.g., an execution screen of an intelligent assistant application) according to an embodiment of the disclosure may include a virtual object identified as having the smallest ratio of occupying the viewing angle of the wearable device 200 among the plurality of virtual objects.

The wearable device 200 according to an embodiment of the disclosure may respectively provide a first utterance hint 514 and a second utterance hint 514 for virtual objects (e.g., the second virtual object 510a, third virtual object 510b) located within the visible distance region. The utterance hints (e.g., the first utterance hint 514a and second utterance hint 514b) according to an embodiment of the disclosure may include an object displaying in text format a user utterance required to control the designated object by voice command. The wearable device 200 according to an embodiment of the disclosure may determine that the second virtual object 510a and the third virtual object 510b are virtual objects located within the visible distance region, and may determine that the fourth virtual object 510c is a virtual object located outside the visible distance region. The wearable device 200 according to an embodiment of the disclosure may not provide an utterance hint for a virtual object located outside the visible distance region.

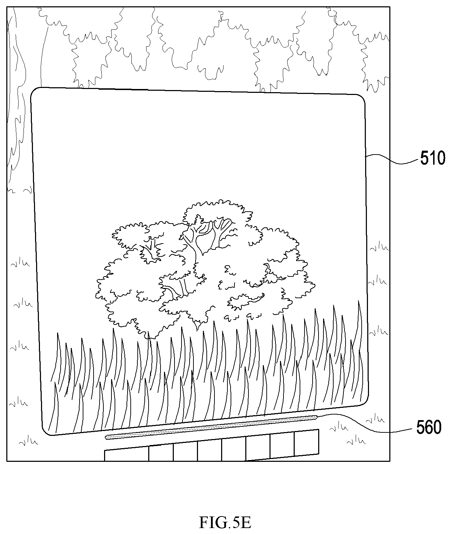

FIG. 5E is an example view illustrating a visual effect (e.g., the first visual effect 560) displayed around the virtual object in case that the virtual object (e.g., the first virtual object 510) is controllable through user utterance according to an embodiment of the disclosure. Referring to FIG. 5E, the wearable device 200 according to an embodiment of the disclosure may provide a visual effect (e.g., the first visual effect 560) having a designated color around the first virtual object 510 (e.g., around a lower portion of the first virtual object 510) as illustrated in FIG. 5E in case that the virtual object is a two-dimensional virtual object controllable by voice command and is located within the visible distance region. Through the first visual effect 560 according to an embodiment of the disclosure, the user may intuitively recognize that the microphone module (e.g., the microphone module 247 of FIG. 2B) has been set to the ON state. The wearable device 200 according to an embodiment of the disclosure may transition the microphone module 247 of the wearable device 200 from the OFF state to the ON state while providing the first visual effect 560.

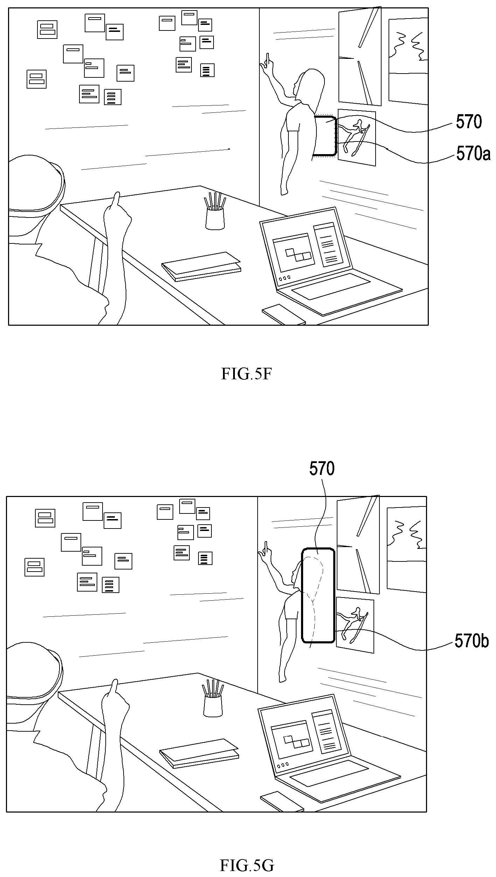

FIGS. 5F and 5G are example views illustrating a function or operation in which the wearable device 200 enlarges a virtual object (e.g., the fifth virtual object 570) displayed beyond the visible distance and provides the enlarged virtual object to the user together with a visual effect (e.g., the third visual effect 570b) according to an embodiment of the disclosure.

Referring to FIGS. 5F and 5G, the wearable device 200 according to an embodiment of the disclosure may provide a second visual effect 570a around a virtual object existing outside the visible distance region. However, according to an embodiment of the disclosure, the second visual effect 570a may not be provided. The wearable device 200 according to an embodiment of the disclosure may enlarge a virtual object existing outside the visible distance region at a designated ratio. The wearable device 200 according to an embodiment of the disclosure may adjust the transparency of a virtual object existing outside the visible distance region. The wearable device 200 according to an embodiment of the disclosure may, e.g., transition the transparency of the virtual object existing outside the visible distance region from an opaque state to a semi-transparent state. The wearable device 200 according to an embodiment of the disclosure may enlarge the virtual object existing outside the visible distance region at a designated ratio without adjusting the transparency of the virtual object existing outside the visible distance region. The wearable device 200 according to an embodiment of the disclosure may provide a third visual effect 570b around the virtual object (e.g., the fifth virtual object 570) enlarged at a designated ratio. The wearable device 200 according to an embodiment of the disclosure may provide a visual effect having a designated color (e.g., blue with a gradation effect) in the form surrounding a border of the virtual object (e.g., the fifth virtual object 570) enlarged at a designated ratio, as exemplarily illustrated in FIG. 5F. The second visual effect 570a and the third visual effect 570b according to an embodiment of the disclosure may have substantially the same display attributes, or may have different display attributes (e.g., thickness).

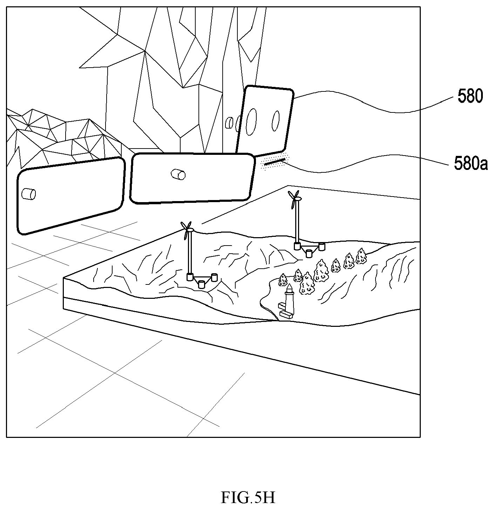

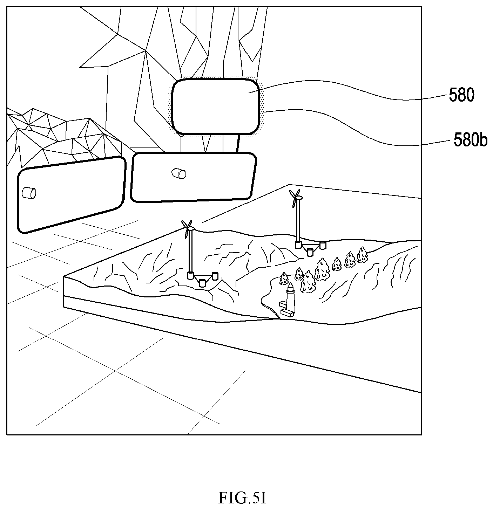

FIGS. 5H and 5I are example views illustrating a function or operation in which the wearable device 200 changes an angle of a virtual object (e.g., the sixth virtual object 580) displayed beyond the visible distance and provides the changed virtual object to the user together with a visual effect (e.g., the fifth visual effect 580b) according to an embodiment of the disclosure. Referring to FIGS. 5H and 5I, the wearable device 200 according to an embodiment of the disclosure may identify that the virtual object (e.g., the sixth virtual object 580) displayed beyond the visible distance is being displayed in a direction different from the user's gaze direction. The virtual object (e.g., the sixth virtual object 580) displayed beyond the visible distance according to an embodiment of the disclosure may also include a virtual object whose screen occupancy rate within the viewing angle region is equal to or less than a designated ratio due to the angle or perspective of the target object. The wearable device 200 according to an embodiment of the disclosure may provide a visual effect (e.g., the fourth visual effect 580a) having a designated color around the sixth virtual object 580. The wearable device 200 according to an embodiment of the disclosure may transition a direction in which the virtual object (e.g., the sixth virtual object 580) displayed beyond the visible distance is displayed to the user's gaze direction in case that the virtual object (e.g., the sixth virtual object 580) displayed beyond the visible distance is focused. The wearable device 200 according to an embodiment of the disclosure may provide a fifth visual effect 580b around the virtual object (e.g., the sixth virtual object 580) with the changed display direction. For example, the wearable device 200 according to an embodiment of the disclosure may provide a visual effect having a designated color in the form surrounding a border of the virtual object with the changed direction.

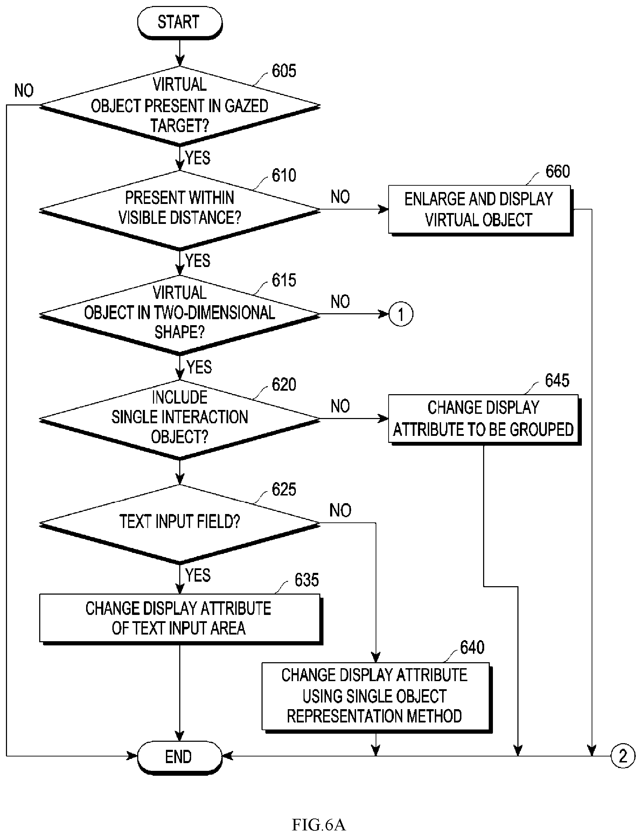

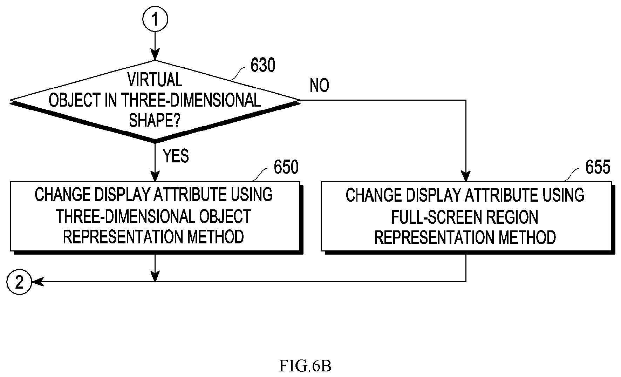

FIGS. 6A and 6B are example views illustrating a function or operation in which the wearable device 200 provides various visual effects according to attributes of an object according to an embodiment of the disclosure.

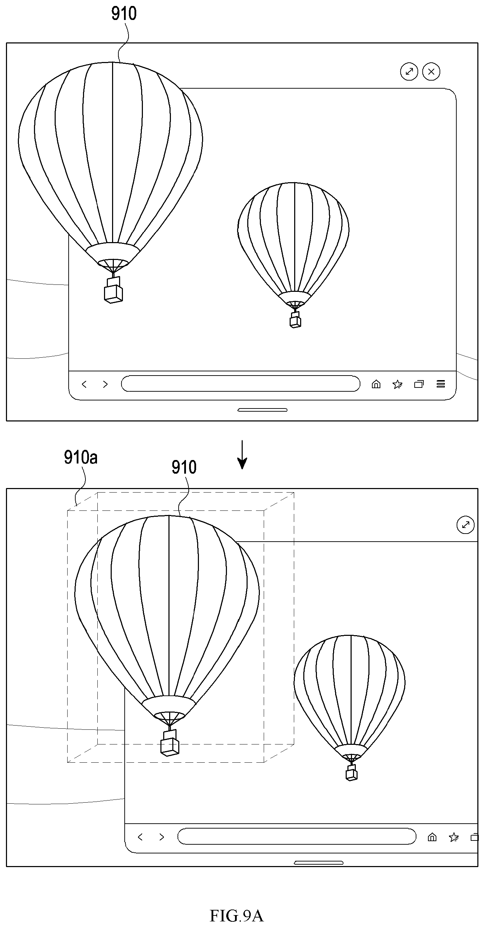

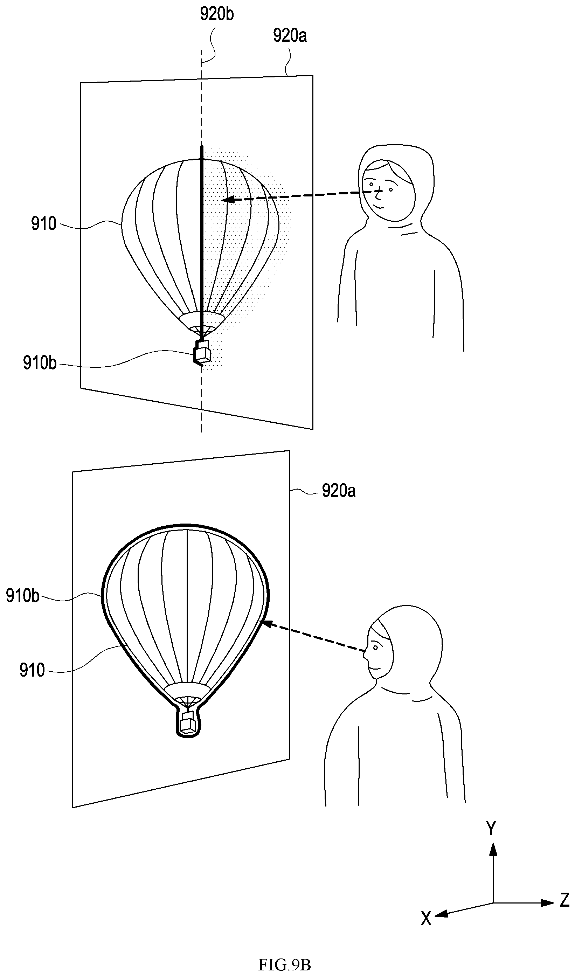

Referring to FIGS. 6A and 6B, the wearable device 200 according to an embodiment of the disclosure may determine whether a virtual object is present in a direction gazed at by the user in operation 605. The wearable device 200 according to an embodiment of the disclosure may determine whether the virtual object is present within the visible distance in operation 610. The wearable device 200 according to an embodiment of the disclosure may determine whether the virtual object has a two-dimensional shape in operation 615. The wearable device 200 according to an embodiment of the disclosure may determine whether the virtual object has a three-dimensional shape in operation 630. The wearable device 200 according to an embodiment of the disclosure may change and display the display attribute using a three-dimensional object representation method in operation 650 in case that the virtual object is determined to have a three-dimensional shape in operation 630. FIG. 9A is an example view illustrating a visual effect (e.g., the sixth visual effect 910a) displayed when a virtual object (e.g., the seventh virtual object 910) has a three-dimensional shape according to an embodiment of the disclosure. FIG. 9B is an example view illustrating a function or operation in which the wearable device 200 displays a visual effect on a virtual object having a three-dimensional shape based on a virtual plane according to an embodiment of the disclosure. Referring to FIG. 9A, the wearable device 200 according to an embodiment of the disclosure may provide a visual effect (e.g., the sixth visual effect 910a) having a designated color in a rectangular parallelepiped shape including the three-dimensional virtual object based on the fact that the three-dimensional virtual object may be controlled by voice command. Referring to FIG. 9B, the wearable device 200 according to an embodiment of the disclosure may set a virtual plane 920a overlapping the three-dimensional virtual object and may provide a visual effect (e.g., the seventh visual effect 910b) having a designated color for a line 920b (e.g., a line in the Y-axis direction) or a surface (e.g., the lower view of FIG. 9B, the XY plane) where the virtual plane 920a and the three-dimensional object overlap.

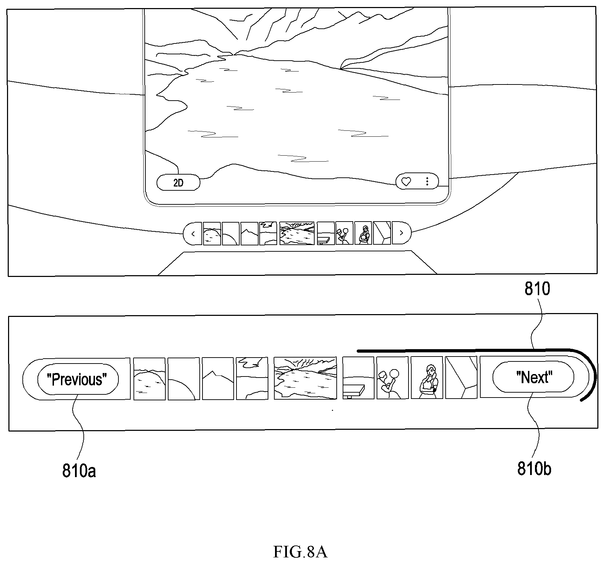

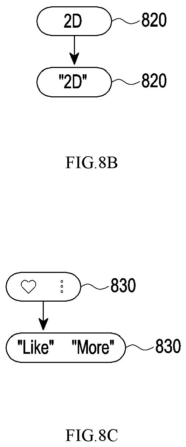

The wearable device 200 according to an embodiment of the disclosure may determine whether the focused virtual object includes a single object capable of interaction (e.g., whether the object capable of interaction is a single object) in operation 620. The wearable device 200 according to an embodiment of the disclosure may change the display attribute so that the plurality of objects are grouped in operation 645 in case that the focused virtual object is a multi-interaction object (e.g., when a plurality of objects capable of interaction with the user are present within a designated region). FIG. 8A is an example view illustrating a function or operation in which the wearable device 200 provides a visual effect of grouping a plurality of virtual objects according to an embodiment of the disclosure. FIGS. 8B and 8C are example views illustrating a function or operation in which the wearable device 200 provides an utterance hint based on text or an icon included in a virtual object according to an embodiment of the disclosure. Referring to FIG. 8A, the wearable device 200 according to an embodiment of the disclosure may provide a visual effect (e.g., the eighth visual effect 810) including all of the plurality of objects when a plurality of objects capable of interaction with the user are present within a designated region (e.g., the first virtual object 810a capable of interaction, first virtual object 810b capable of interaction). The wearable device 200 according to an embodiment of the disclosure may provide the visual effect (e.g., the eighth visual effect 810) to the user as a dynamically moving shape (e.g., a shape surrounding the borders of the grouped objects). Referring to FIGS. 8B and 8C, the wearable device 200 according to an embodiment of the disclosure may add quotation marks to text existing within the virtual objects (e.g., the eighth virtual object 820 and ninth virtual object 830) to intuitively inform the user that the focused virtual object may be controlled by an utterance command corresponding to the text within the quotation marks. The wearable device 200 according to an embodiment of the disclosure may change an icon to text corresponding to the icon and provide the text to the user as illustrated in FIG. 8C. The wearable device 200 according to an embodiment of the disclosure may process the user utterance in the same manner as if a user input to select the icon had been input if an utterance corresponding to the text is input from the user.

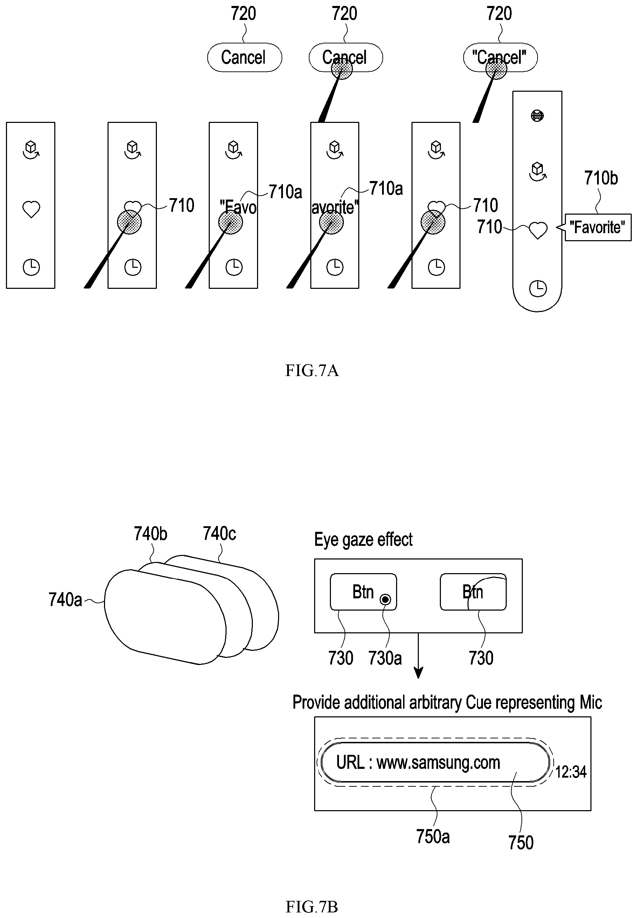

The wearable device 200 according to an embodiment of the disclosure may determine whether the focused virtual object includes a text input field 512 in operation 625. The wearable device 200 according to an embodiment of the disclosure may change the display attribute using a single object representation method in operation 640 in case that the focused virtual object does not include the text input field 512. FIG. 7A is an example view illustrating a function or operation in which the wearable device 200 converts an icon to text and provides the text to the user as an utterance hint according to an embodiment of the disclosure. FIG. 7B is an example view illustrating a function or operation in which a wearable device provides different visual effects according to attributes of a virtual object (e.g., a clickable object, a text-inputtable object, etc.) according to an embodiment of the disclosure. Referring to FIG. 7A, the wearable device 200 according to an embodiment of the disclosure may add quotation marks to text existing within the virtual object (e.g., the tenth virtual object 710) to intuitively inform the user that the focused virtual object may be controlled by an utterance command corresponding to the text within the quotation marks. The wearable device 200 according to an embodiment of the disclosure may change an icon to text corresponding to the icon and provide the text to the user as illustrated in FIG. 7A. The wearable device 200 according to an embodiment of the disclosure may process the user utterance in the same manner as if a user input to select the icon had been input if an utterance corresponding to the text is input from the user. Referring to FIG. 7B, the wearable device 200 according to an embodiment of the disclosure may display the shape of the designated icon (e.g., first icon 730) changed to intuitively inform the user that the designated icon (e.g., first icon 730) is a selectable object, as illustrated in FIG. 7B, when a second indicator 730a according to the user's gaze is directed toward the designated icon (e.g., first icon 730). The virtual object according to an embodiment of the disclosure may be represented in a hierarchical structure of a first layer 740a for representing a border, a second layer 740b for representing text included in the icon, and a third layer 740c for representing a designated color. The wearable device 200 according to an embodiment of the disclosure may provide a visual effect (e.g., the ninth visual effect 750a) having a designated color around the text input field in case that the virtual object includes a text input field (e.g., first text input field 750), as illustrated in FIG. 7B.

The wearable device 200 according to an embodiment of the disclosure may change the display attribute of the text input area in operation 635. The wearable device 200 according to an embodiment of the disclosure may change the display attribute of the input field 512 when user input (e.g., a user's gaze) is directed toward the input field 512. The wearable device 200 according to an embodiment of the disclosure may, e.g., represent the color of the input field 512 in a first designated color and provide an utterance hint inside the input field 512. However, the wearable device 200 according to an embodiment of the disclosure may display only the color of the input field 512 in the first designated color without providing the utterance hint.

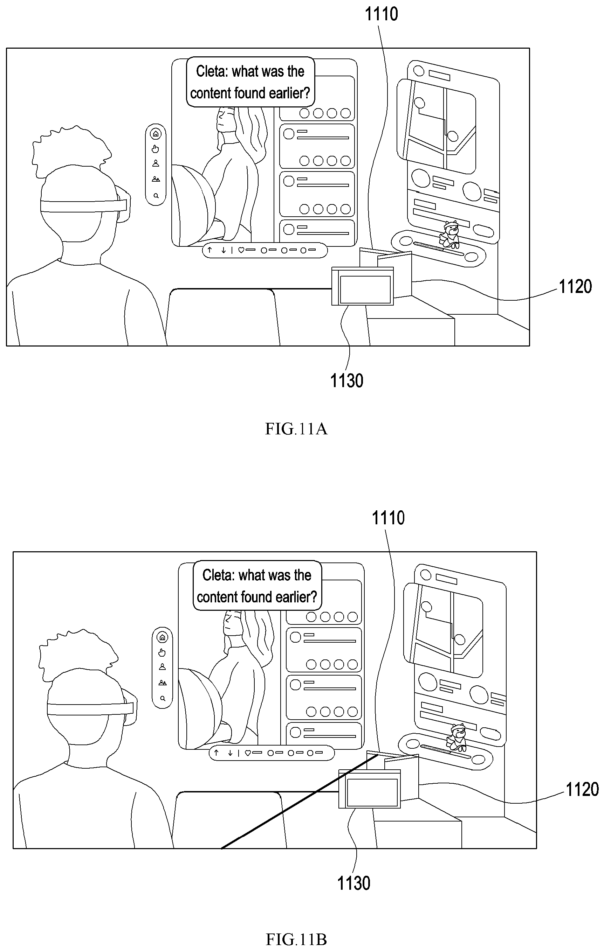

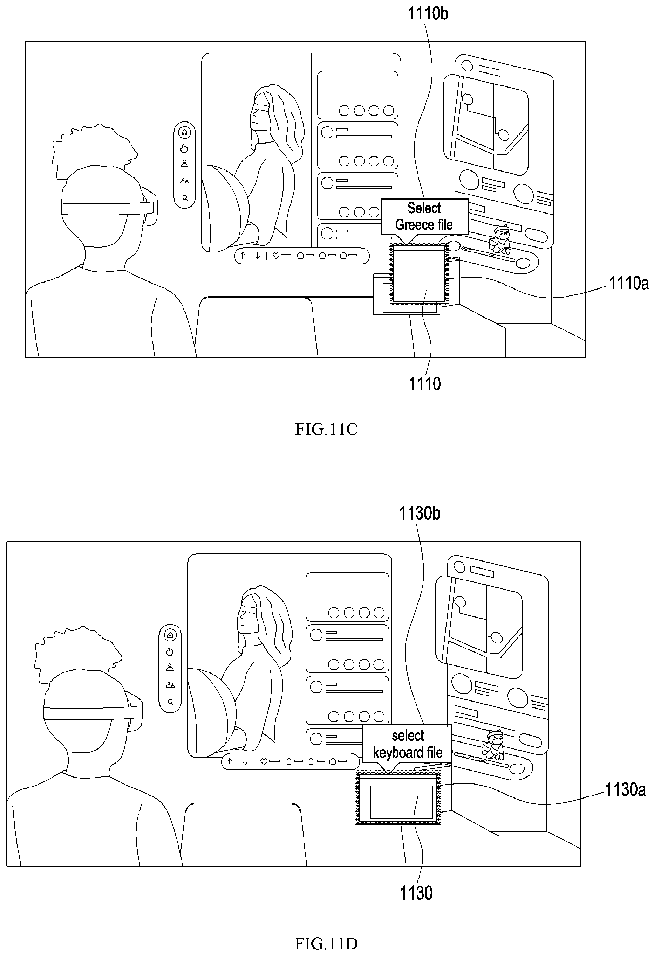

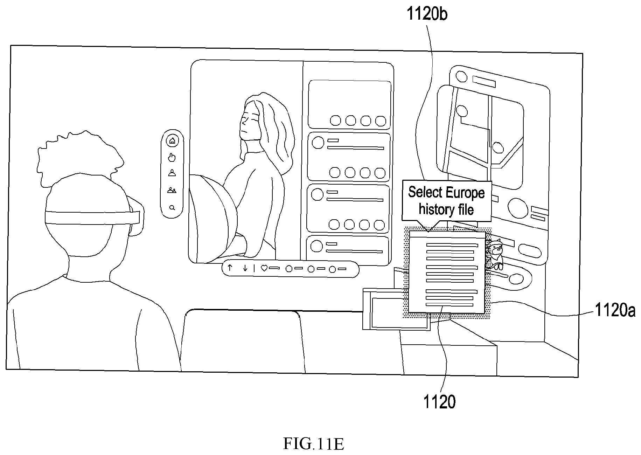

The wearable device 200 according to an embodiment of the disclosure may enlarge and display the focused virtual object in operation 660 in case that the focused virtual object is not present within the visible distance region. FIGS. 11A to 11E are example views illustrating functions or operations in which the wearable device 200 enlarges and displays a virtual object displayed smaller than a designated threshold size and provides a visual effect and an utterance hint according to an embodiment of the disclosure. The wearable device 200 according to an embodiment of the disclosure may display a plurality of virtual objects (e.g., the eleventh virtual object 1110, the twelfth virtual object 1120, and/or the thirteenth virtual object 1130). The wearable device 200 according to an embodiment of the disclosure may enlarge the size of the virtual object (e.g., the eleventh virtual object 1110) corresponding to the user's gaze direction based on a designated ratio, as illustrated in FIG. 11B. The wearable device 200 according to an embodiment of the disclosure may provide a visual effect (e.g., the tenth visual effect 1110a) having a designated color and an utterance hint (e.g., third utterance hint 1110b) around the enlarged virtual object. The wearable device 200 according to an embodiment of the disclosure may display other virtual objects that are not focused by adjusting transparency (e.g., adjusting from opaque to semi-transparent). The wearable device 200 according to an embodiment of the disclosure may enlarge the changed virtual object and provide an utterance hint corresponding to the enlarged virtual object if the focused virtual object is changed according to movement of the user's gaze, as illustrated in FIGS. 11C and 11D. The wearable device 200 according to an embodiment of the disclosure may control the virtual object corresponding to the utterance hint (e.g., enlarge the virtual object to full screen) if user utterance corresponding to the utterance hint is input.

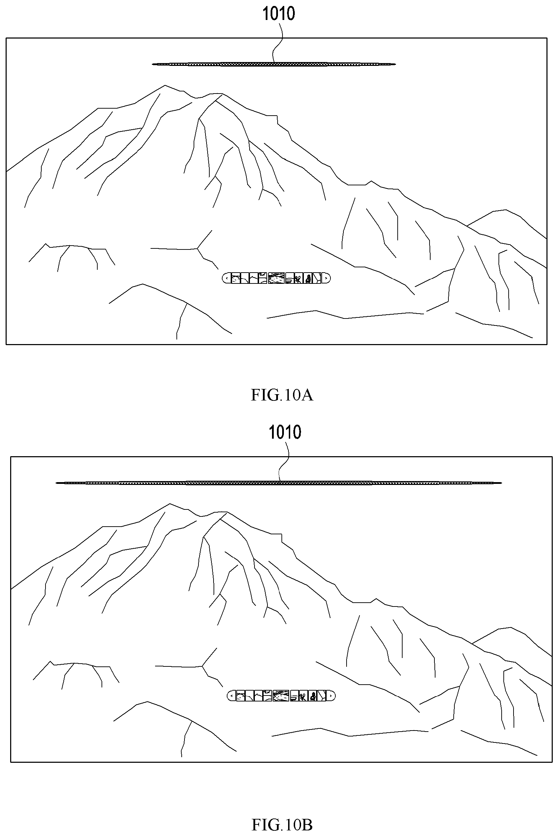

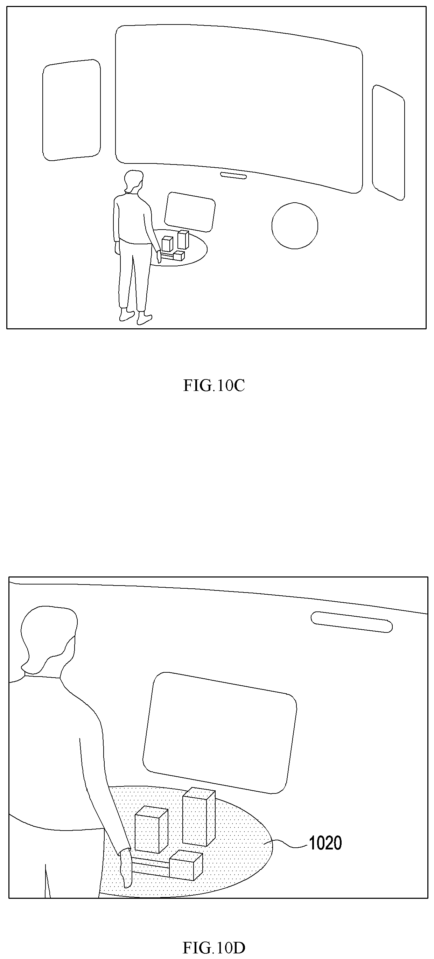

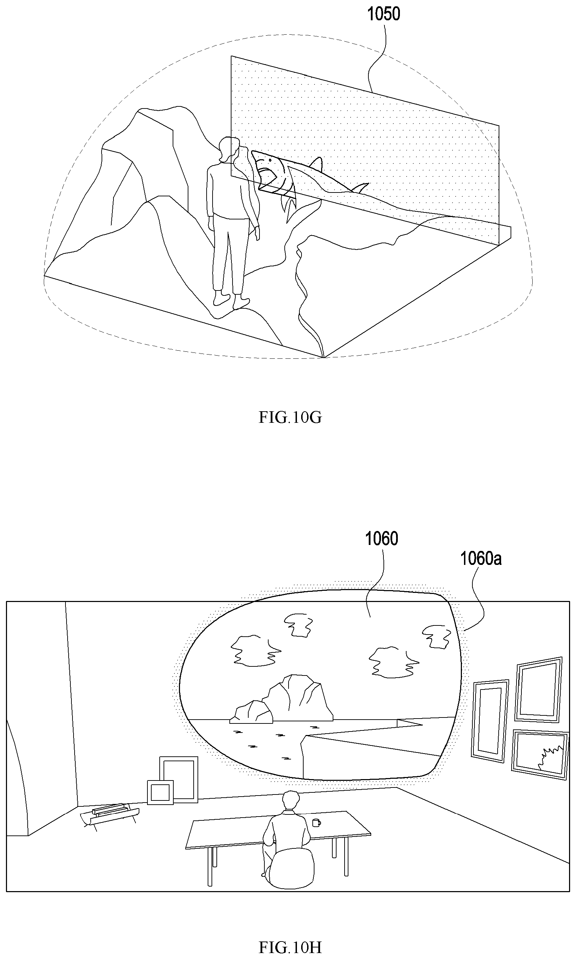

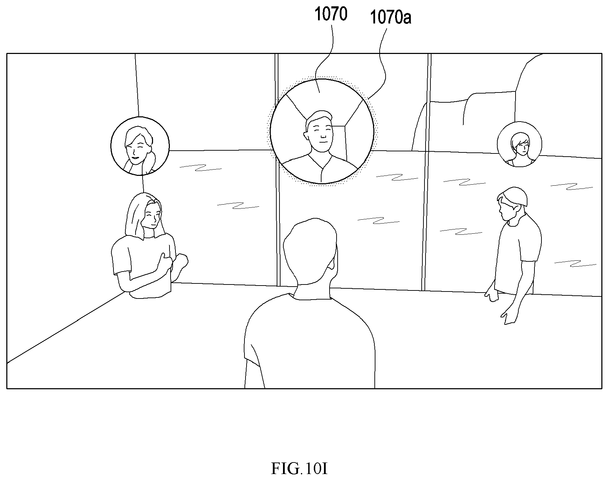

The wearable device 200 according to an embodiment of the disclosure may change the display attribute using a full-screen region representation method in operation 655 in case that the focused virtual object does not have a three-dimensional shape. The full-screen region representation method according to an embodiment of the disclosure is described in more detail with reference to FIGS. 10A and 10B. FIGS. 10A and 10B are example views illustrating a function or operation in which the wearable device 200 provides a visual effect based on a degree of a viewing angle of the user according to an embodiment of the disclosure. FIGS. 10C to 10I are example views illustrating a function or operation in which the wearable device 200 displays a visual effect for a designated space in case that the designated space is controllable by an utterance command according to an embodiment of the disclosure. Referring to FIGS. 10A and 10I, the wearable device 200 according to an embodiment of the disclosure may provide a visual effect (e.g., the eleventh visual effect 1010) indicating that a space itself may be controlled by user utterance when interaction is possible with a view currently being provided to the user through a view method such as a spatial view (e.g., when in a slideshow full view state). The wearable device 200 according to an embodiment of the disclosure may identify a maximum viewing range of the user. The wearable device 200 according to an embodiment of the disclosure may identify the maximum viewing range of the user based on past gaze tracking history information of the user. The wearable device 200 according to an embodiment of the disclosure may identify the maximum viewing range of the user based on learned results using artificial intelligence (e.g., a generative artificial intelligence model). The wearable device 200 according to an embodiment of the disclosure may provide visual effects of different sizes according to the viewing range of the user. FIG. 10A exemplarily illustrates an embodiment of providing a visual effect for a user with a relatively narrow viewing range. FIG. 10B exemplarily illustrates an embodiment of providing a visual effect for a user with a relatively wide viewing range. According to an embodiment of the disclosure, a display attribute (e.g., length of the visual effect) of the visual effect for a user with a relatively narrow viewing range may be different from a display attribute of the visual effect for a user with a relatively wide viewing range (e.g., the length of the visual effect is displayed longer as illustrated in FIG. 10B).

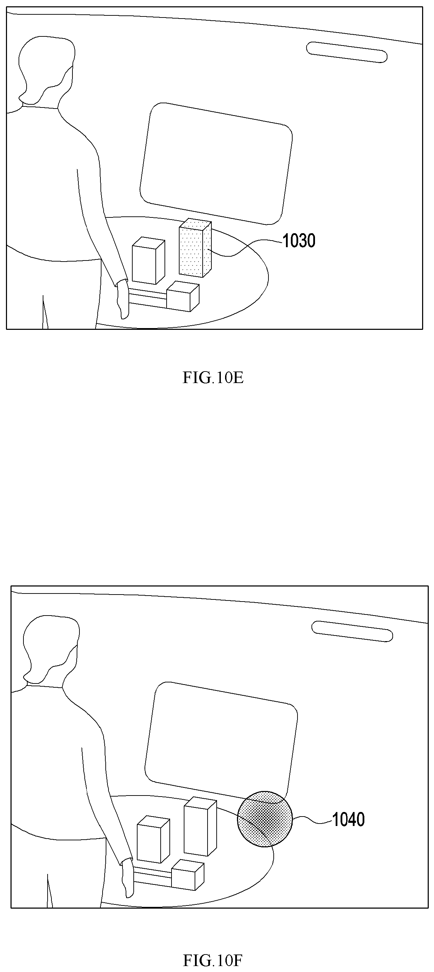

Referring to FIG. 10C, the wearable device 200 according to an embodiment of the disclosure may provide a designated space as a virtual object or virtual reality. The wearable device 200 according to an embodiment of the disclosure may provide a visual effect having a designated color for the designated space when it is identified that voice control is possible for the designated space (e.g., the first space 1020). The wearable device 200 according to an embodiment of the disclosure may provide a visual effect for a designated object when it is identified that voice control is possible for a designated object 1030 within the designated space, as illustrated in FIG. 10D. The wearable device 200 according to an embodiment of the disclosure may provide a visual effect for a designated region when it is identified that voice control is possible for a designated region (e.g., the first region 1040) of the designated space, as illustrated in FIG. 10E. The wearable device 200 according to an embodiment of the disclosure may control the designated space, control the designated object, or control the designated region if a designated user utterance is input. The wearable device 200 according to an embodiment of the disclosure may provide a visual effect for the entire viewing angle range 1050 of the wearable device 200, as illustrated in FIG. 10F. The wearable device 200 according to an embodiment of the disclosure may provide a visual effect (e.g., the twelfth visual effect 1060a) around designated regions 1060, 1070 when interaction is possible with the designated region (e.g., when a space different from a space in which the user is currently located is configured to be connectable), as illustrated in FIG. 10G. The wearable device 200 according to an embodiment of the disclosure may control the virtual object so that the designated virtual object is displayed within the viewing angle region using user utterance (e.g., "Hi Bixby, show me the gallery app in front of my eyes") in case that the designated virtual object is present outside the viewing angle region. The wearable device 200 according to an embodiment of the disclosure may be controlled so that information designated as sensitive information (e.g., a password) according to a pre-designated policy may not be input through voice command even when input through voice command is possible.

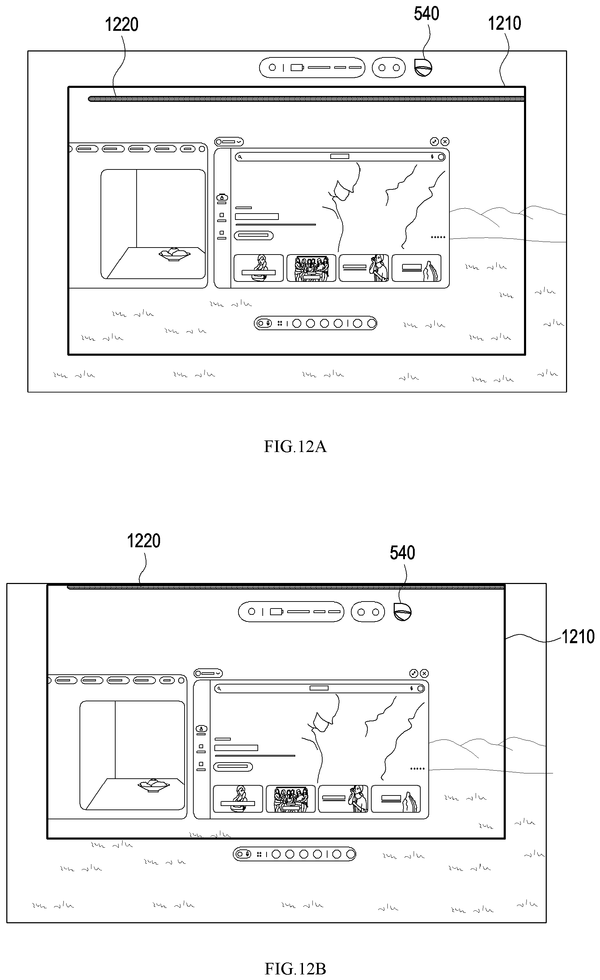

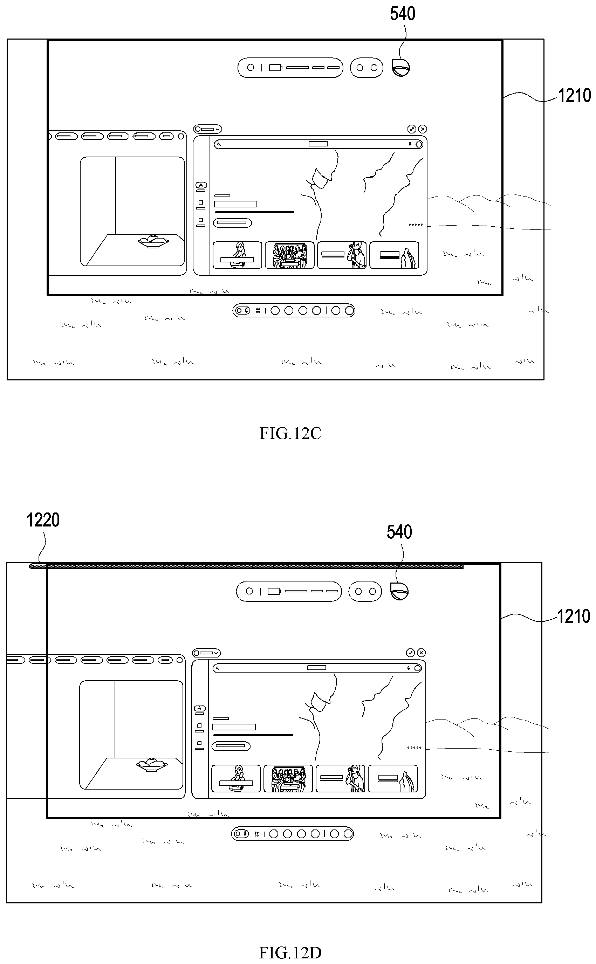

FIGS. 12A to 12D are example views illustrating a function or operation in which the wearable device 200 provides a visual effect representing presence of the indicator 540 existing outside the viewing angle of the wearable device 200 to the user according to an embodiment of the disclosure. Referring to FIG. 12A, the wearable device 200 according to an embodiment of the disclosure may display the indicator 540 outside the viewing angle region 1210 of the wearable device 200. The wearable device 200 according to an embodiment of the disclosure may display a visual effect (e.g., the fourteenth visual effect 1220) indicating that the indicator 540 is being displayed outside the viewing angle region 1210 (e.g., above the viewing angle region 1210) within the viewing angle region 1210. Referring to FIG. 12B, in case that the indicator 540 is included within the viewing angle region 1210 as the user looks upward, the wearable device 200 according to an embodiment of the disclosure may identify the user's gaze gazing at the indicator 540. Referring to FIG. 12C, the wearable device 200 according to an embodiment of the disclosure may display the state of the indicator as a "listening" state. The wearable device 200 according to an embodiment of the disclosure may be configured to receive an utterance command in a state in which the user gazes at the indicator 540. The wearable device 200 according to an embodiment of the disclosure may execute an artificial intelligence assistant application if a wake word (e.g., "Hi Bixby") is acquired after the user views the indicator 540. The wearable device 200 according to an embodiment of the disclosure may acquire a designated utterance command (e.g., "recenter") from the user in a state in which the indicator 540 is gazed at by the user. The wearable device 200 according to an embodiment of the disclosure may perform a task corresponding to the utterance command if a designated utterance command is acquired from the user.

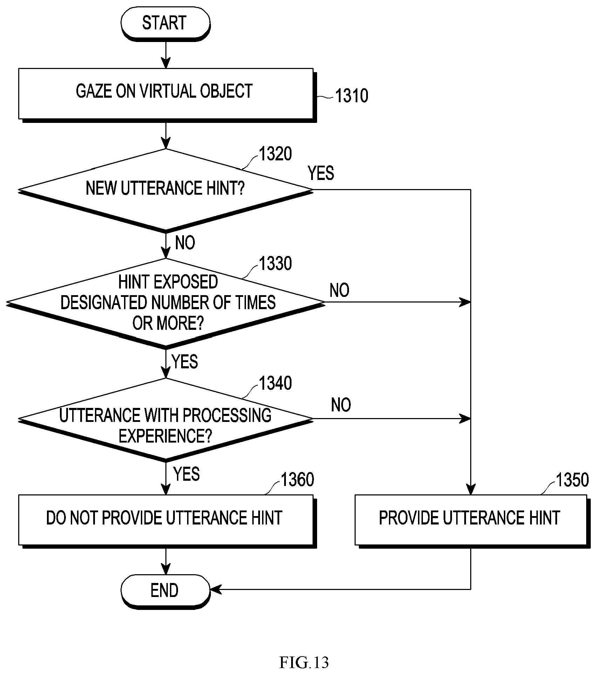

FIG. 13 is an example view illustrating a function or operation in which the wearable device 200 provides an utterance hint based on a number of times the utterance hint has been provided according to an embodiment of the disclosure. Referring to FIG. 13, the wearable device 200 according to an embodiment of the disclosure may acquire a gaze on a virtual object in operation 1310. The wearable device 200 according to an embodiment of the disclosure may determine whether an utterance hint to be provided related to the virtual object focused according to operation 1310 is a new utterance hint, in other words, whether the utterance hint is provided to the user for the first time, in operation 1320. The wearable device 200 according to an embodiment of the disclosure may determine whether the hint is an utterance hint that has been exposed a designated number of times (e.g., 3 times) or more in operation 1330 in case that the utterance hint is not a new utterance hint. The wearable device 200 according to an embodiment of the disclosure may determine whether the hint is an utterance with processing experience in operation 1340 in case that the hint is a hint that has been exposed a designated number of times or more. The wearable device 200 according to an embodiment of the disclosure may not provide the utterance hint in operation 1360 in case that the hint is an utterance with processing experience. The wearable device 200 according to an embodiment of the disclosure may provide the utterance hint in operation 1350 in case that the utterance hint to be provided is a new utterance hint, is not a hint that has been exposed a designated number of times or more, or is an utterance hint without processing experience.

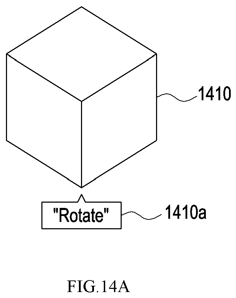

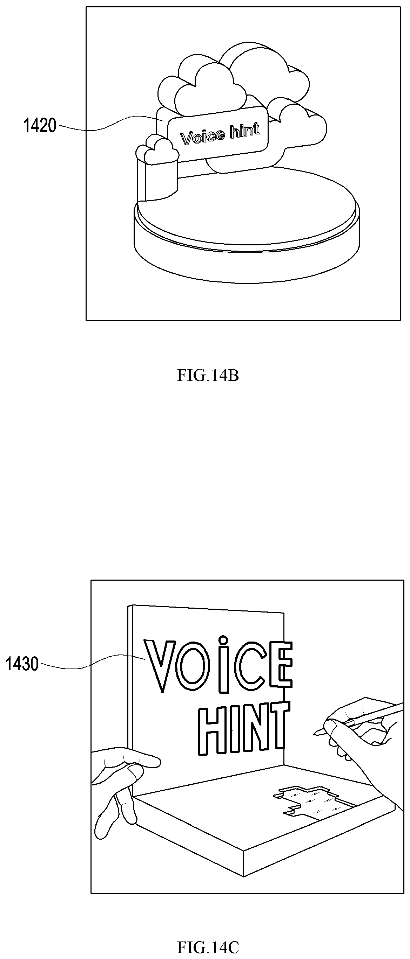

FIGS. 14A to 14C are example views illustrating a function or operation in which the wearable device 200 provides an utterance hint (e.g., the fourth utterance hint 1420 and/or the fifth utterance hint 1430) in a manner similar to a representation method of a virtual object (e.g., the fourteenth virtual object 1410) having a three-dimensional shape according to an embodiment of the disclosure. Referring to FIG. 14A, the wearable device 200 according to an embodiment of the disclosure may provide an utterance hint for controlling the three-dimensional virtual object 1410a around the three-dimensional virtual object (e.g., the fourteenth virtual object 1410) like a speech bubble. Referring to FIGS. 14B and 14C, the wearable device 200 according to an embodiment of the disclosure may analyze the shape and form of the three-dimensional virtual object and then provide an utterance hint in the form similar to the shape and form of the three-dimensional virtual object based on the analysis result.

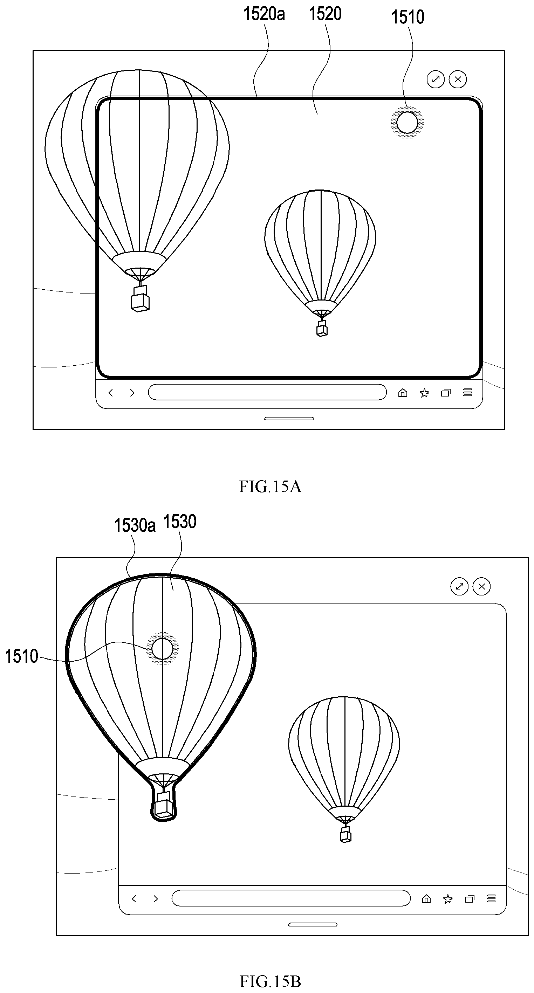

FIGS. 15A to 15C are example views illustrating a function or operation in which the wearable device 200 provides a visual effect (e.g., the fifteenth visual effect 1520a and/or sixteenth visual effect 1530a) to a virtual object (e.g., the fifteenth virtual object 1520, sixteenth virtual object 1530, text input field 1540) that is focused according to gaze movement of a user wearing the wearable device 200 according to an embodiment of the disclosure.

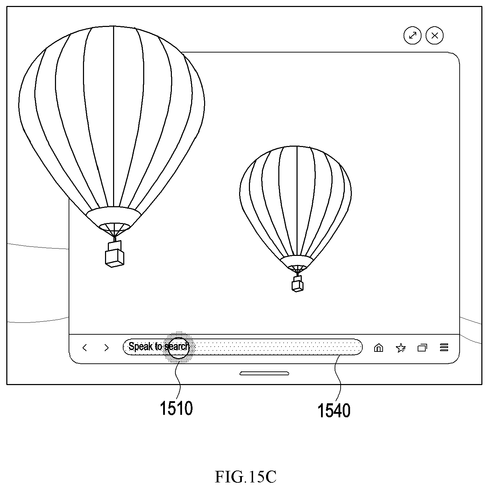

Referring to FIG. 15A, the wearable device 200 according to an embodiment of the disclosure may identify the user's gaze gazing at a designated virtual object (e.g., the fifteenth virtual object 1520). The wearable device 200 according to an embodiment of the disclosure may display a gaze indicator 1510 corresponding to the user's gaze direction. The wearable device 200 according to an embodiment of the disclosure may determine whether the virtual object (e.g., the fifteenth virtual object 1520) focused according to the user's gaze is an object controllable through voice command. The wearable device 200 according to an embodiment of the disclosure may provide a visual effect (e.g., the fifteenth visual effect 1520a) around the virtual object in case that the virtual object (e.g., the fifteenth virtual object 1520) focused according to the user's gaze is determined to be an object controllable through voice command. Referring to FIG. 15B, the wearable device 200 according to an embodiment of the disclosure may identify movement of the user's gaze. The wearable device 200 according to an embodiment of the disclosure may identify that another designated virtual object (e.g., the sixteenth virtual object 1530) is focused. The wearable device 200 according to an embodiment of the disclosure may determine whether the virtual object (e.g., the sixteenth virtual object 1530) focused according to the user's gaze is an object controllable through voice command. The wearable device 200 according to an embodiment of the disclosure may provide a visual effect (e.g., the sixteenth visual effect 1530a) around the virtual object in case that the virtual object (e.g., the sixteenth virtual object 1530) focused according to the user's gaze is determined to be an object controllable through voice command. Referring to FIG. 15C, the wearable device 200 according to an embodiment of the disclosure may identify the user's gaze directed toward the text input field 1540. The wearable device 200 according to an embodiment of the disclosure may provide a designated visual effect having a designated color together with an utterance hint in case that the user's gaze directed toward the text input field 1540 is identified.

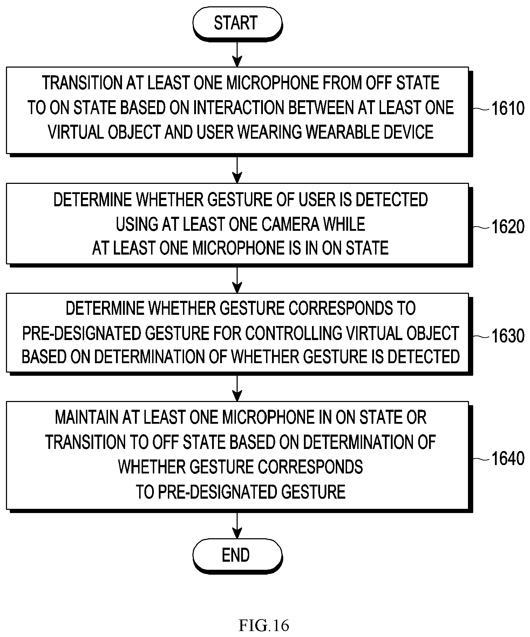

FIG. 16 is an example view illustrating a function or operation in which the wearable device 200 controls at least one microphone (e.g., a microphone module) according to a user input (e.g., a user gesture) according to an embodiment of the disclosure.

Referring to FIG. 16, the wearable device 200 according to an embodiment of the disclosure may transition at least one microphone (e.g., the microphone module 247) from the OFF state to the ON state based on interaction between at least one virtual object 510 and a user 1750 wearing the wearable device 200 in operation 1610. At least one microphone (e.g., the microphone module 247) according to an embodiment of the disclosure may be set to the OFF state at a time when the wearable device 200 is worn by the user (e.g., a time before the virtual object 510 is displayed). At least one microphone (e.g., the microphone module 247) according to an embodiment of the disclosure may be transitioned from the OFF state to the ON state if the virtual object 510 is displayed or if user input (e.g., a user's gaze) for the virtual object 510 is acquired. However, this is exemplary, and at least one microphone (e.g., the microphone module 247) according to an embodiment of the disclosure may be set to the ON state even at a time when the device is worn by the user (e.g., a time before the virtual object 510 is displayed). In this case, the wearable device 200 according to an embodiment of the disclosure may maintain the state of the at least one microphone in the ON state based on interaction with the user. The wearable device 200 according to an embodiment of the disclosure may further perform an operation of determining whether the virtual object 510 is an object that may be controlled through user utterance in operation 1610. The wearable device 200 according to an embodiment of the disclosure may determine whether the virtual object 510 is an object controllable through user utterance based on, e.g., metadata (e.g., flag value) stored in association with the displayed or to-be-displayed virtual object 510. The wearable device 200 according to an embodiment of the disclosure may transition the microphone module 247 from the OFF state to the ON state or maintain the ON state in case that the virtual object 510 is an object controllable through user utterance.

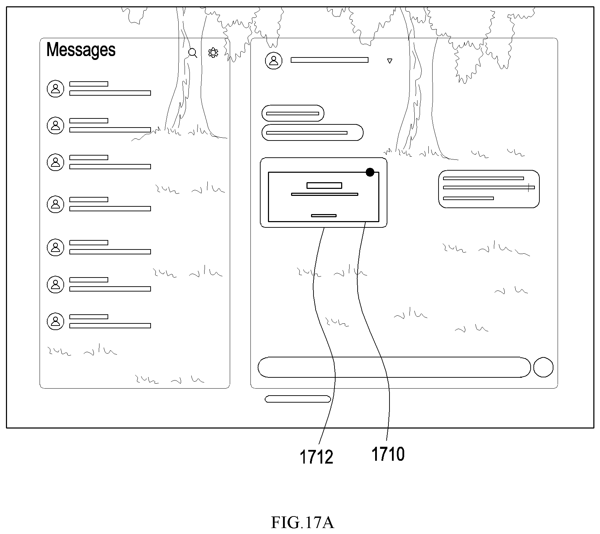

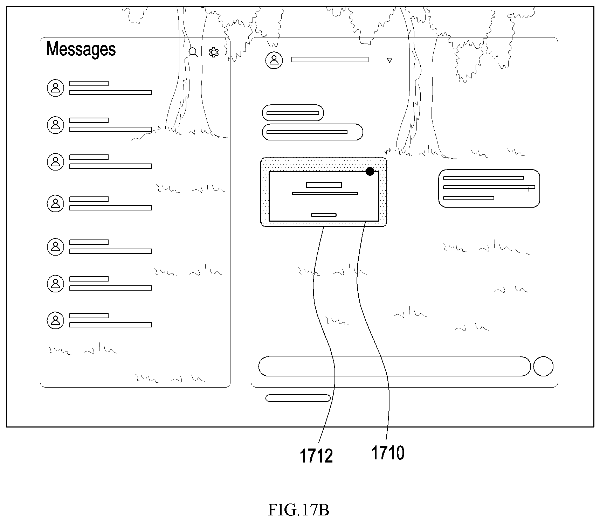

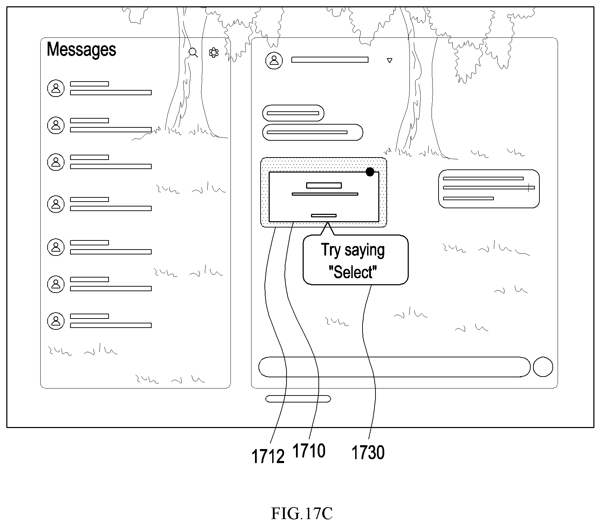

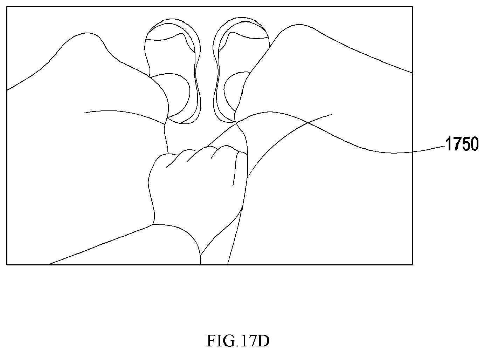

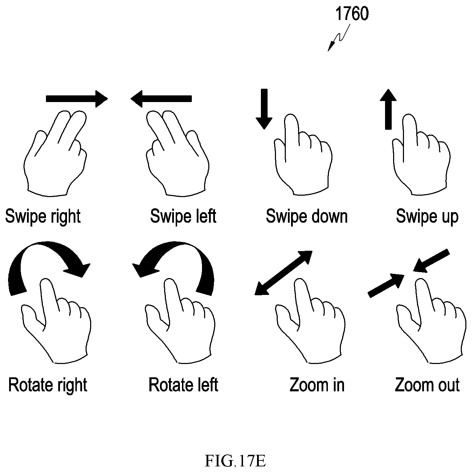

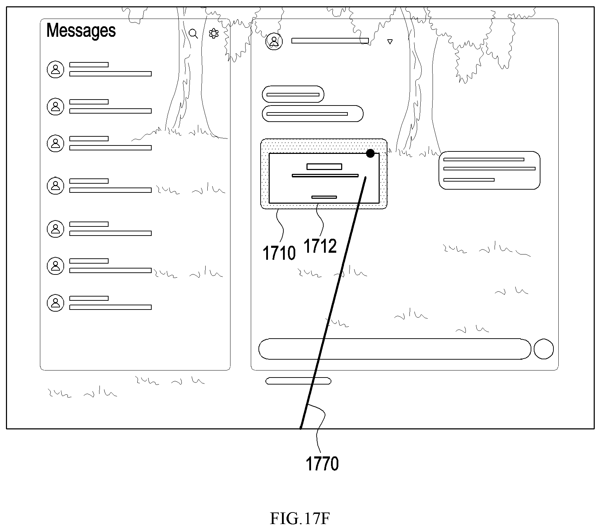

FIGS. 17A and 17B are example views illustrating a function or operation of transitioning the microphone module from the OFF state to the ON state according to a user input for a virtual object (e.g., a user's gaze on the virtual object) according to an embodiment of the disclosure. Referring to FIGS. 5A and 5B, the wearable device 200 according to an embodiment of the disclosure may display the virtual object 510 as illustrated in FIG. 5A. The wearable device 200 according to an embodiment of the disclosure may display a region (e.g., the border 1712 region) of the virtual object 510 in a first designated color (e.g., gray) before user input (e.g., a user's gaze) for the virtual object 510 is acquired (e.g., in case that the microphone module 247 is in the OFF state). The wearable device 200 according to an embodiment of the disclosure may transition the microphone module 247 from the OFF state to the ON state if interaction with the user (e.g., a user's gaze on the virtual object 510) occurs (e.g., if user input is acquired), as illustrated in FIG. 17B. The wearable device 200 according to an embodiment of the disclosure may display a region (e.g., the border 1712 region) of the virtual object 510 in a second designated color (e.g., purple) as illustrated in FIG. 5B to inform the user that the microphone module 247 has been transitioned to the ON state (e.g., to inform the user that the virtual object 247 may be controlled through voice command).

FIG. 5C is an example view illustrating a function or operation in which the wearable device 200 provides an utterance hint according to an embodiment of the disclosure.

Referring to FIG. 5C, the wearable device 200 according to an embodiment of the disclosure may provide an utterance hint 1730 as a virtual object if a designated time (e.g., 5 seconds) elapses in a state in which the microphone module 247 is set to ON. The utterance hint 1730 according to an embodiment of the disclosure may include a command for controlling the virtual object 510 by voice.

Returning to FIG. 4, the wearable device 200 according to an embodiment of the disclosure may determine whether user input other than user utterance (e.g., a user's gesture) is detected using at least one camera (e.g., camera module 250) while at least one microphone (e.g., the microphone module 247) is in the ON state in operation 1620. FIG. 5D is an example view illustrating a function or operation in which the wearable device 200 determines an intent of other user input (e.g., a user's gesture input) based on an image acquired through a camera module (e.g., the third camera module 256) in a state in which the wearable device 200 is worn by the user according to an embodiment of the disclosure. Referring to FIG. 5D, the wearable device 200 according to an embodiment of the disclosure may determine whether a portion of the user's body (e.g., a user's hand) is detected using a camera module (e.g., the third camera module 256). The wearable device 200 according to an embodiment of the disclosure may determine that the user has an intention to input a designated gesture when a portion of the user's body (e.g., a user's hand) is detected. The wearable device 200 according to an embodiment of the disclosure may determine a matching ratio of the user's hand movement to a pre-designated gesture as illustrated in FIG. 5E and may determine that the user is in the process of attempting a gesture input (e.g., determine that there is an intent for gesture input) in case that the determined matching ratio is equal to or greater than a threshold ratio (e.g., 50%). The wearable device 200 according to an embodiment of the disclosure may determine that there is an intent for user input when it is detected through the camera module 247 that the user is holding an external device in a hand or when a designated virtual object is being pointed to through a controller. In this case, the wearable device 200 according to an embodiment of the disclosure may process the user's utterance through a limited utterance processing method (e.g., processing based on a pre-designated utterance (e.g., "select" and similar utterances ("selection," "click," "push," etc.)) in the wearable device 200 and/or a large language model (LLM) server) in case that the user's utterance is input. For example, when an instruction such as "copy URL" is acquired from the user, "copy URL" may be a clear utterance instruction included in the pre-designated utterance. Accordingly, the wearable device 200 according to an embodiment of the disclosure may process the utterance command acquired from the user based on the limited utterance processing method. However, when slang not included in the pre-designated utterance is input as an utterance command, e.g., the wearable device 200 according to an embodiment of the disclosure may not process the input utterance command or may provide a guide message including content to input an accurate utterance to the user. Information about an utterance similar to the pre-designated utterance according to an embodiment of the disclosure may be pre-designated or may be acquired through a result learned through learning of the wearable device 200. According to an embodiment of the disclosure, the gestures illustrated in FIG. 5E are exemplarily illustrated, and types of pre-designated gestures may be further added.

The wearable device 200 according to an embodiment of the disclosure may determine whether the gesture corresponds to a pre-designated gesture for controlling the virtual object based on the determination of whether the gesture is detected in operation 1630. The wearable device 200 according to an embodiment of the disclosure may determine whether the user's hand movement corresponds to a pre-designated gesture in case that the user's hand movement acquired through the camera module (e.g., the third camera module 256) is detected. FIG. 5F is an example view illustrating pre-designated gestures for controlling the virtual object 510 according to an embodiment of the disclosure. Referring to FIG. 5E, the wearable device 200 according to an embodiment of the disclosure may determine whether the user's hand motion (e.g., gesture) is a swipe right gesture for moving the position of the virtual object 510 to the right. The wearable device 200 according to an embodiment of the disclosure may determine whether the user's hand motion (e.g., gesture) is a swipe left gesture for moving the position of the virtual object 510 to the left. The wearable device 200 according to an embodiment of the disclosure may determine whether the user's hand motion (e.g., gesture) is a swipe down gesture for moving the position of the virtual object 510 downward. The wearable device 200 according to an embodiment of the disclosure may determine whether the user's hand motion (e.g., gesture) is a swipe up gesture for moving the position of the virtual object 510 upward. The wearable device 200 according to an embodiment of the disclosure may determine whether the user's hand motion (e.g., gesture) is a rotate right gesture for rotating the virtual object 510 in a rightward direction. The wearable device 200 according to an embodiment of the disclosure may determine whether the user's hand motion (e.g., gesture) is a rotate left gesture for rotating the virtual object 510 in a leftward direction. The wearable device 200 according to an embodiment of the disclosure may determine whether the user's hand motion (e.g., gesture) is a zoom in gesture for enlarging the size of the virtual object 510. The wearable device 200 according to an embodiment of the disclosure may determine whether the user's hand motion (e.g., gesture) is a zoom out gesture for reducing the size of the virtual object 510. However, the user gestures illustrated in FIG. 5E are exemplary, and other various gestures may be stored in the wearable device 200 as pre-designated gestures.

The wearable device 200 according to an embodiment of the disclosure may maintain at least one microphone (e.g., the microphone module 247) in the ON state or transition at least one microphone (e.g., the microphone module 247) to the OFF state based on the determination of whether the gesture corresponds to the pre-designated gesture in operation 1640. The wearable device 200 according to an embodiment of the disclosure may determine whether the user gesture detected by the camera module (e.g., the third camera module 256) corresponds to the pre-designated user gesture exemplarily illustrated in FIG. 5F. The wearable device 200 according to an embodiment of the disclosure may transition at least one microphone (e.g., the microphone module 247) to the OFF state when determining that the user gesture detected by the camera module (e.g., the third camera module 256) corresponds to the pre-designated user gesture exemplarily illustrated in FIG. 5E. FIG. 5F is an example view illustrating a control environment (e.g., a multi-modal environment) in which both user utterance and user input other than user utterance may be acquired before the wearable device 200 identifies user input (e.g., a user gesture) according to an embodiment of the disclosure. Referring to FIG. 5F, the wearable device 200 according to an embodiment of the disclosure may display a visual object (e.g., the hand-ray 570) corresponding to the user's hand in case that the user's hand is detected by the camera module (e.g., the third camera module 256), determining that the user has an intention to input a gesture. The visual object (e.g., the hand-ray 1770) according to an embodiment of the disclosure may be displayed so that its position moves correspondingly according to a change in the position of the user's hand. FIG. 5F exemplarily illustrates a state before the user's gesture is input (e.g., in case that the user inputs a gesture of spreading two fingers and pointing toward the virtual object 510 as a preliminary step for inputting a swipe right gesture). In FIG. 5F, since the user's gesture does not yet substantially completely correspond to the pre-designated gesture, a control environment (e.g., a multi-modal environment) in which both user utterance and user input other than user utterance (e.g., a user gesture) may be acquired may be provided to the user. The wearable device 200 according to an embodiment of the disclosure may display a designated region (e.g., the border 1712 region) of the virtual object in a second designated color to inform the user that a state of being able to acquire user utterance input is available. The wearable device 200 according to an embodiment of the disclosure may move the display position of the virtual object 510 to the right according to the input user gesture in case that the user completes the gesture input (e.g., when a gesture of moving a finger pointing to the virtual object 510 to the right is detected). The wearable device 200 according to an embodiment of the disclosure may transition the state of the microphone module 247 from the ON state to the OFF state (e.g., transition to a single-modal control environment) based on detection of the user gesture. The wearable device 200 according to an embodiment of the disclosure may display a designated region of the virtual object 510 in a first designated color (e.g., gray) based on detection of the user gesture, as illustrated in FIG. 5A.

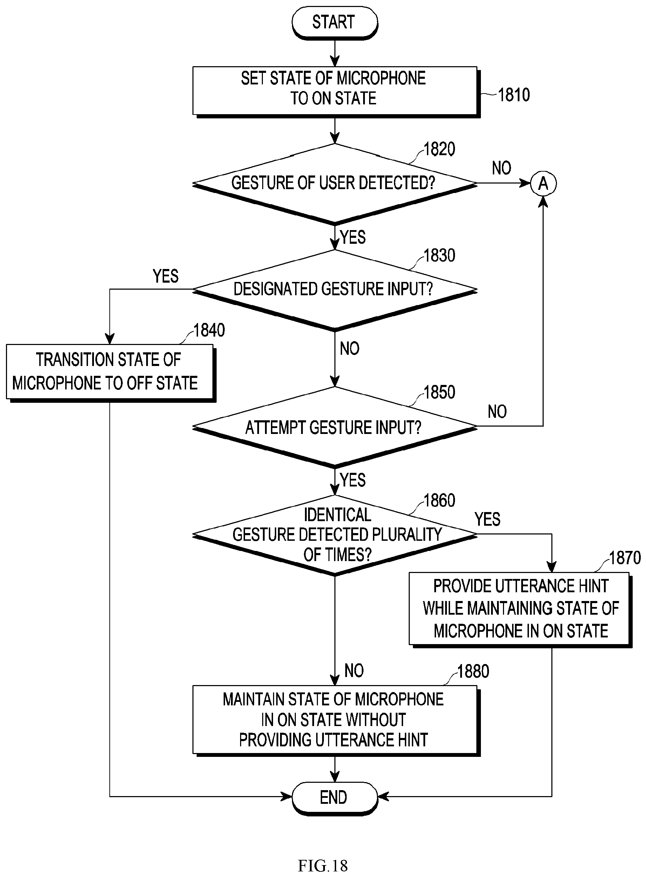

FIG. 18 is an example view illustrating a function or operation in which the wearable device 200 controls the microphone module 247 according to a type of detected user gesture (e.g., a first type corresponding to a pre-designated gesture or a second type not corresponding to the pre-designated gesture) according to an embodiment of the disclosure.

Referring to FIG. 18, the wearable device 200 according to an embodiment of the disclosure may set the state of the microphone (e.g., the microphone module 247) to the ON state in operation 1810. The wearable device 200 according to an embodiment of the disclosure may set the state of the microphone (e.g., the microphone module 247) to the ON state when determining that the user's gaze is gazing at the virtual object 510.

The wearable device 200 according to an embodiment of the disclosure may determine whether a user gesture is detected in operation 1820. The wearable device 200 according to an embodiment of the disclosure may detect movement of the user's hand using the camera module 250.

The wearable device 200 according to an embodiment of the disclosure may determine whether a pre-designated gesture has been input in operation 1830. The wearable device 200 according to an embodiment of the disclosure may transition the state of the microphone from the ON state to the OFF state in operation 640 (operation 630-YES) when determining that, e.g., a "swipe right" gesture (e.g., a first type gesture corresponding to the pre-designated gesture) has been input.

The wearable device 200 according to an embodiment of the disclosure may determine whether the user is in the process of attempting a gesture input in operation 1850 when determining that the input user gesture does not correspond to the pre-designated gesture (e.g., operation 1830-NO). The wearable device 200 according to an embodiment of the disclosure may determine a matching ratio of the user's hand movement to a pre-designated gesture as illustrated in FIG. 5F and may determine that the user is in the process of attempting a gesture input in case that the determined matching ratio is equal to or greater than a threshold ratio (e.g., 50%).

The wearable device 200 according to an embodiment of the disclosure may determine whether the same gesture is detected a plurality of times in operation 1860. The wearable device 200 according to an embodiment of the disclosure may determine whether the user's hand movement being attempted according to operation 1850 is repetitively substantially the same movement. However, according to an embodiment of the disclosure, operation 1860 may be omitted.

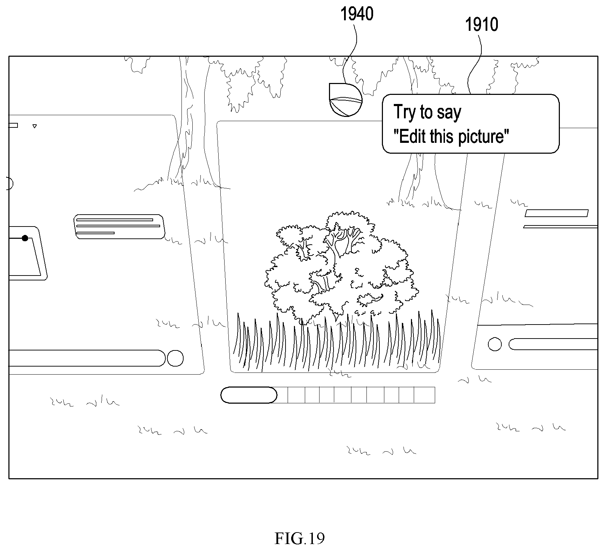

The wearable device 200 according to an embodiment of the disclosure may provide an utterance hint while maintaining the state of the microphone in the ON state in operation 1870 in case that the same gesture is detected a plurality of times (e.g., operation 1860-YES). FIG. 19 is an example view illustrating a function or operation in which the wearable device 200 provides an utterance hint together with at least one indicator 1740 according to an embodiment of the disclosure. The wearable device 200 according to an embodiment of the disclosure may provide an utterance hint 1910 as illustrated in FIG. 19 while maintaining the state of the microphone in the ON state in operation 1870 in case that the same gesture is detected a plurality of times (e.g., operation 1860-YES). In this case, the wearable device 200 according to an embodiment of the disclosure may process the acquired utterance input in the wearable device 200 rather than an external server (e.g., an LLM server) when an utterance input is acquired from the user. Alternatively, the wearable device 200 according to an embodiment of the disclosure may process the acquired user utterance through a limited utterance processing method. The utterance hint 1910 according to an embodiment of the disclosure may include a hint including an utterance command corresponding to the gesture that the user is attempting to input. For example, in case that the user only points at the virtual object 510 with a finger without moving the finger in a designated direction, the wearable device 200 according to an embodiment of the disclosure may provide an utterance hint such as "Try saying swipe right" to the user. The wearable device 200 according to an embodiment of the disclosure may maintain the state of the microphone in the ON state without providing the utterance hint 1910 in operation 1880 in case that the same gesture is not detected a plurality of times (e.g., operation 1860-NO).

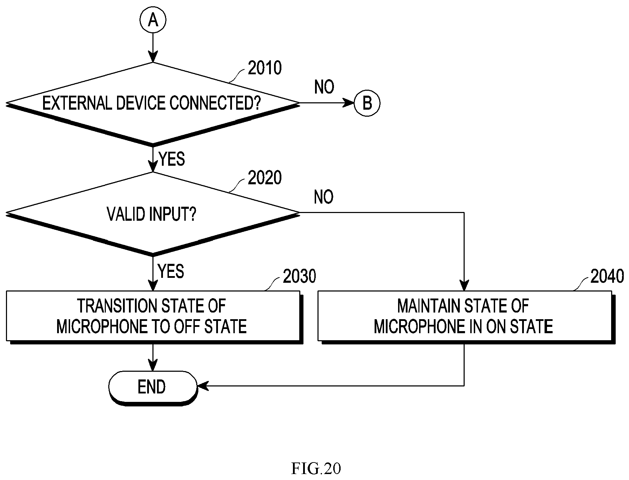

FIG. 20 is an example view illustrating a function or operation in which the wearable device 200 controls the microphone module 247 based on input to an external device (e.g., first external device 2110a, second external device 2110b) operatively connected with the wearable device 200 according to an embodiment of the disclosure. FIGS. 9A and 9B are example views illustrating a type of external device (e.g., first external device 2110a, second external device 2110b) operatively connected with the wearable device according to an embodiment of the disclosure.

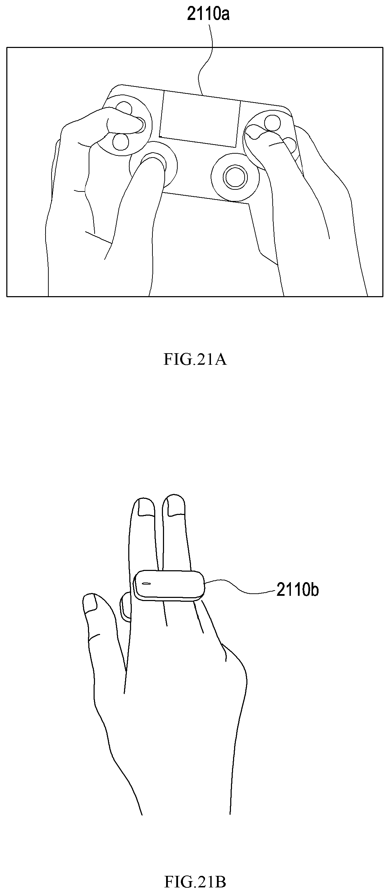

Referring to FIG. 20, the wearable device 200 according to an embodiment of the disclosure may determine whether an external device (e.g., first external device 2110a (e.g., first controller) as illustrated in FIG. 21A and/or second external device 2110b (e.g., second controller) as illustrated in FIG. 21B) operatively connected with the wearable device 200 is present in operation 2010 in case that the user's gesture is not detected (e.g., in case that the user's hand is not detected or when movement of the user's hand is not detected, e.g., operation 1820-NO). The external device (e.g., first external device 2110a, second external device 2110b) according to an embodiment of the disclosure may include a device set to be operatively connected with the wearable device 200 to control the virtual object 510.

The wearable device 200 according to an embodiment of the disclosure may determine whether valid input is input through the external device (e.g., first external device 2110a, second external device 2110b) in operation 2020 in case that the external device (e.g., first external device 2110a, second external device 2110b) is connected (e.g., operation 2010-YES). The wearable device 200 according to an embodiment of the disclosure may determine, e.g., whether button input provided on the external device (e.g., first external device 2110a, second external device 2110b) is acquired.

The wearable device 200 according to an embodiment of the disclosure may transition the state of the microphone to the OFF state in operation 2030 when valid input is acquired (e.g., operation 2020-YES). The wearable device 200 according to an embodiment of the disclosure may transition the state of the microphone to the ON state in operation 2040 when valid input is not acquired (e.g., operation 2020-NO). In this case, the wearable device 200 according to an embodiment of the disclosure may process user utterance as a limited utterance processing method when utterance input is acquired from the user.

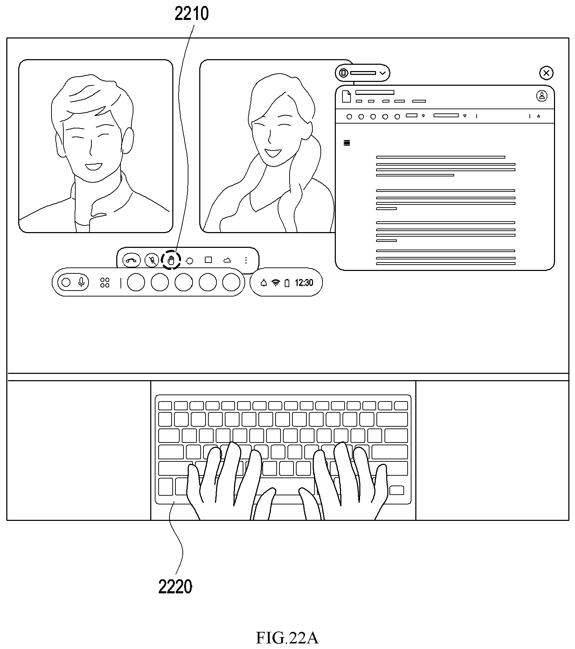

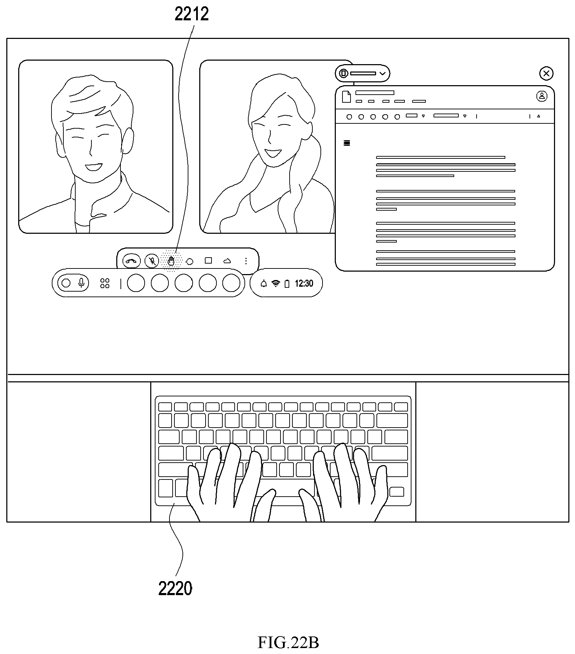

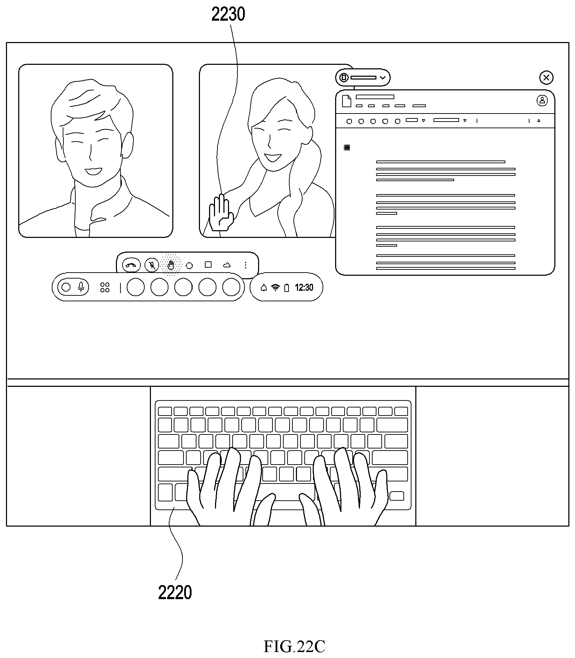

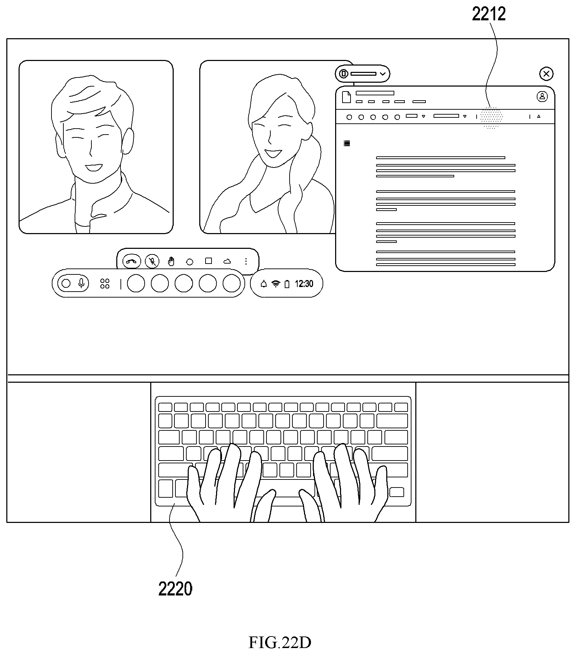

FIGS. 22A, 22B, 22C, and 22D are example views illustrating a function or operation of maintaining a state of the microphone module 247 in the ON state when a keyboard 2220 is connected as an external device to the wearable device 200, as an exception to the function or operation illustrated in FIG. 20, according to an embodiment of the disclosure.

Referring to FIGS. 22A, 22B, 22C, and 22D, the wearable device 200 according to an embodiment of the disclosure may identify that a keyboard 2220 is connected as an external device. The wearable device 200 according to an embodiment of the disclosure may detect the user's gaze on a specific icon 2210. The wearable device 200 according to an embodiment of the disclosure may provide a designated first visual effect 2212 (e.g., a circular visual effect displayed in a second designated color) around the icon 2210 to inform the user that the icon 2210 may be controlled by voice in case that the user's gaze on the specific icon 2210 is detected. The wearable device 200 according to an embodiment of the disclosure may acquire the user's utterance (e.g., "select" as a control utterance command for selecting the icon 2210) while input is performed through the keyboard 2220. The wearable device 200 according to an embodiment of the disclosure may maintain the state of the microphone module 247 in the ON state even when input is performed through the external device in case that the keyboard 2220 is connected. Accordingly, the wearable device 200 according to an embodiment of the disclosure may acquire user utterance while input is performed through the keyboard 2220 by the user. The wearable device 200 according to an embodiment of the disclosure may perform a function corresponding to the icon 2210 (e.g., display a hand-shaped visual object 2230) according to the user's utterance, as illustrated in FIG. 22C. The wearable device 200 according to an embodiment of the disclosure may display the first visual object 2212 indicating that a virtual object corresponding to the user's gaze direction may be controlled by user utterance around the virtual object or inside the virtual object when a change in the user's gaze direction is identified, as illustrated in FIG. 22D.

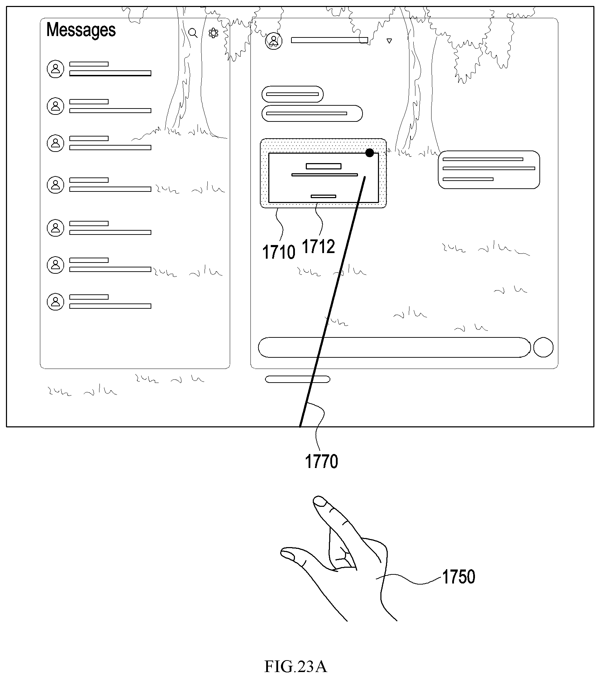

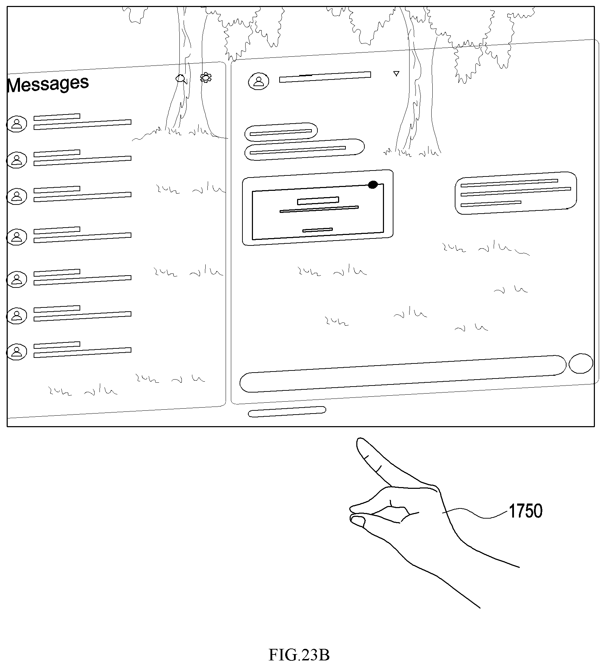

FIGS. 23A and 23B are example views illustrating a function or operation in which the wearable device 200 transitions a state of the microphone module 247 from the ON state to the OFF state when a user gesture is detected and the detected user gesture is determined to correspond to a pre-designated gesture according to an embodiment of the disclosure. Referring to FIG. 23A, the wearable device 200 according to an embodiment of the disclosure may determine a matching ratio with the pre-designated user gesture when movement of the user's hand is detected and may identify the user's gesture input intent based on the determination. FIG. 23A exemplarily illustrates an embodiment in which the user is spreading two fingers as a preliminary step for selecting the virtual object 510 (e.g., for inputting a gesture). Referring to FIG. 23B, the wearable device 200 according to an embodiment of the disclosure may transition the microphone module 247 to the OFF state and perform a function according to the detected user gesture in case that the user inputs a gesture of selecting the virtual object (e.g., in case that the matching ratio between the detected user's hand motion and the pre-designated gesture matches by a designated ratio (e.g., 90%) or more). The wearable device 200 according to an embodiment of the disclosure may display a visual object (e.g., the hand-ray 1770) corresponding to the position of the user's hand.

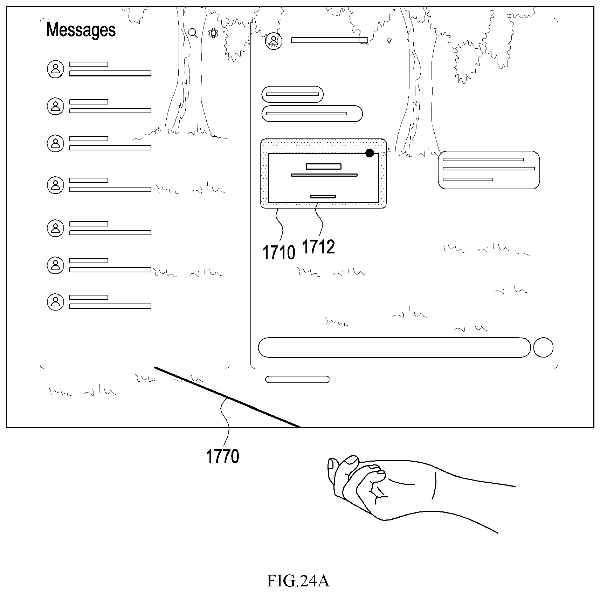

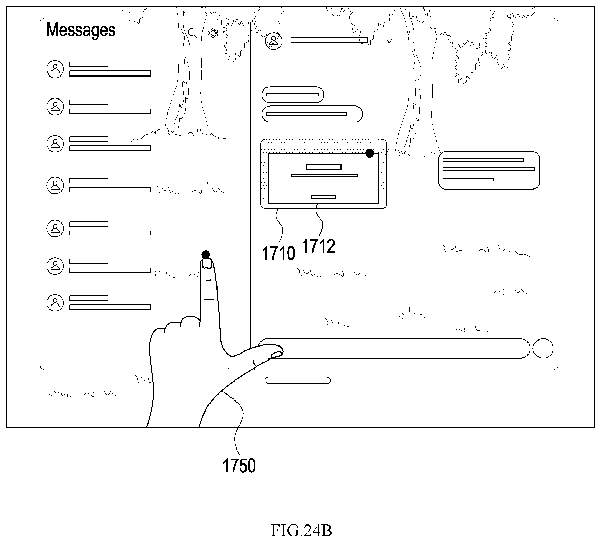

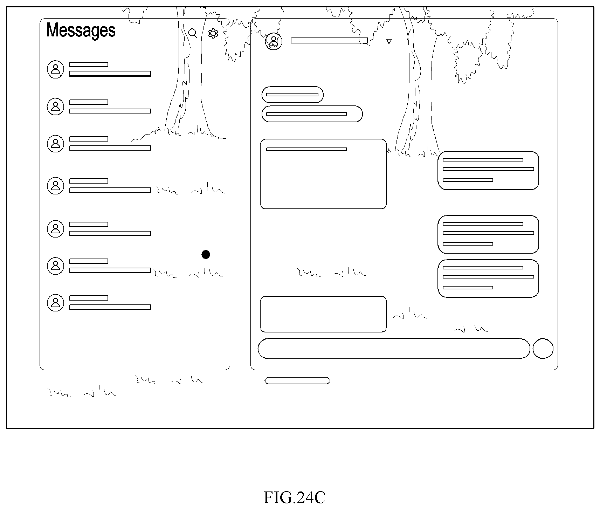

FIGS. 24A, 24B, and 24C are example views illustrating a function or operation in which the wearable device 200 transitions the state of the microphone module 247 from the ON state to the OFF state according to a direct touch gesture of the user on the virtual object 510 according to an embodiment of the disclosure.

Referring to FIG. 24A, the wearable device 200 according to an embodiment of the disclosure may detect the user's hand. The wearable device 200 according to an embodiment of the disclosure may display a visual object (e.g., the hand-ray 1770) corresponding to the position of the user's hand. Referring to FIG. 12B, the wearable device 200 according to an embodiment of the disclosure may detect that the user's hand is detected within the viewing angle of the wearable device 200 and that a direct touch on the virtual object 510 is performed. Referring to FIG. 12C, the wearable device 200 according to an embodiment of the disclosure may transition the state of the microphone module 247 to the OFF state while performing a function corresponding to the user's direct touch.

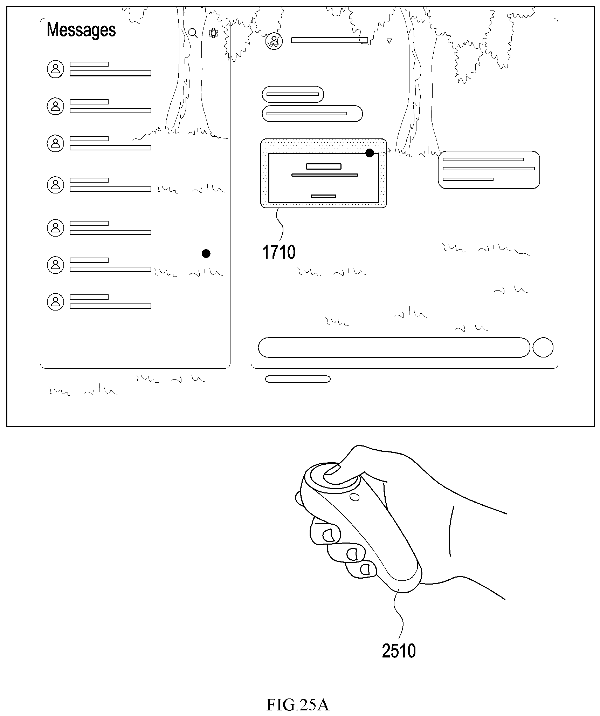

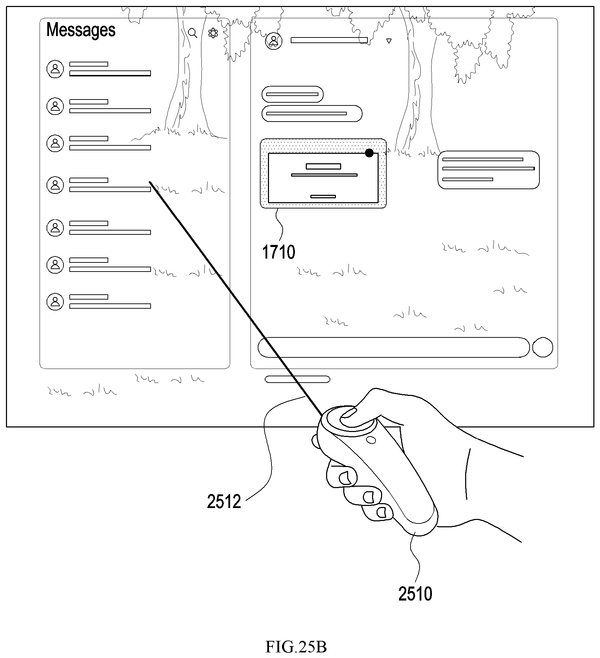

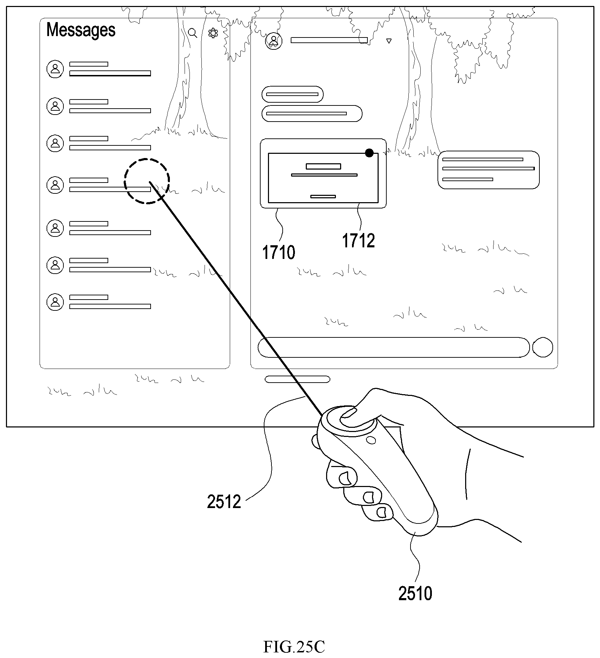

FIGS. 25A, 25B, and 25C are example views illustrating a function or operation in which the wearable device 200 transitions the state of the microphone module 247 from the ON state to the OFF state according to a user input to an external device (e.g., the controller 2410) operatively connected with the wearable device 200 according to an embodiment of the disclosure.

Referring to FIG. 25A, the wearable device 200 according to an embodiment of the disclosure may identify that the user is controlling the controller 2410 to point toward a designated virtual object 510. The wearable device 200 according to an embodiment of the disclosure may determine that there is an input intent in case that the user is controlling the controller 2410 to point toward the designated virtual object 510. The wearable device 200 according to an embodiment of the disclosure may process user utterance as a limited utterance processing method when determining that there is an input intent and in case that the user's utterance is input. Referring to FIG. 13B, the wearable device 200 according to an embodiment of the disclosure may identify that valid input (e.g., button input) to the controller 2410 has been input from the user. In this case, the wearable device 200 according to an embodiment of the disclosure may transition the state of the microphone module 247 to the OFF state while performing a function corresponding to the user's input to the controller 1210.

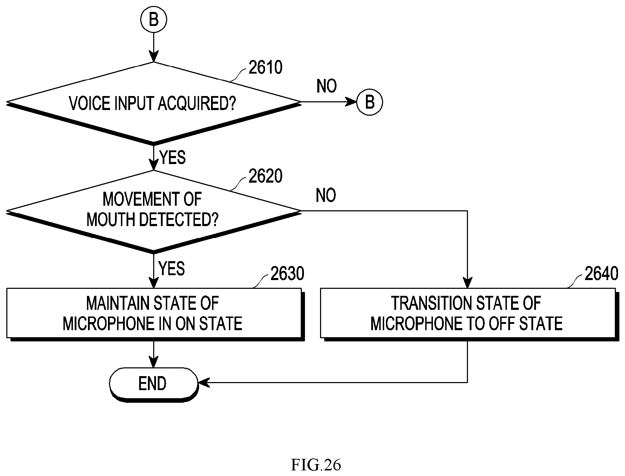

FIG. 26 is an example view illustrating a function or operation in which the wearable device 200 detects a mouth shape of a user and controls a microphone module based on detected movement of the mouth according to an embodiment of the disclosure.

Referring to FIG. 26, the wearable device 200 according to an embodiment of the disclosure may determine whether voice input of the user has been acquired in operation 2610 when determining that the external device is not connected (e.g., operation 2010-NO). The wearable device 200 according to an embodiment of the disclosure may determine whether movement of the mouth is detected using the camera module 250 in operation 2620 when voice input of the user is acquired (e.g., operation 2610-YES). The wearable device 200 according to an embodiment of the disclosure may maintain the state of the microphone module 247 in the ON state in operation 2630 when movement of the mouth is detected. The wearable device 200 according to an embodiment of the disclosure may transition the state of the microphone module 247 to the OFF state in operation 2640 when movement of the mouth is not detected.

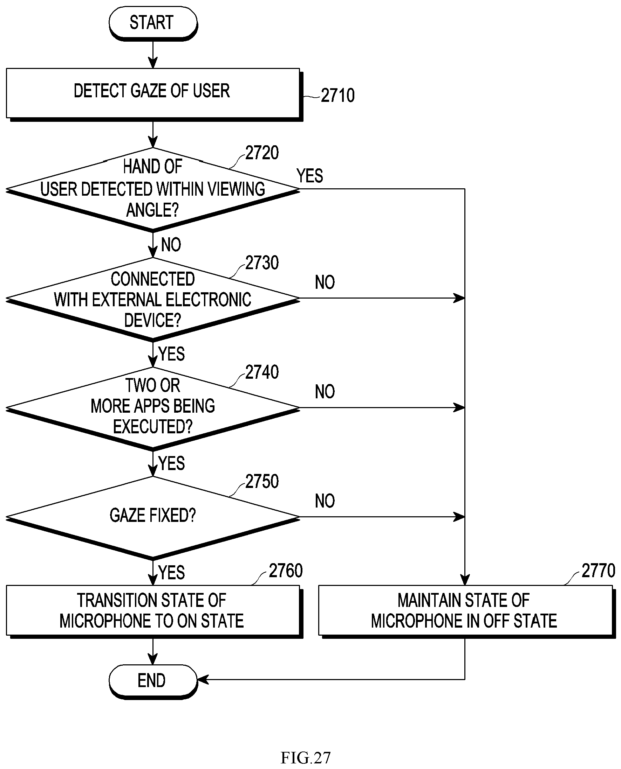

FIG. 27 is an example view illustrating a function or operation in which the wearable device 200 controls the microphone module 247 based at least on the user's gaze when a plurality of applications are being executed according to an embodiment of the disclosure.

Referring to FIG. 27, the wearable device 200 according to an embodiment of the disclosure may detect the user's gaze in operation 1510. The wearable device 200 according to an embodiment of the disclosure may determine whether the user's hand is detected within the viewing angle of the wearable device 200 in operation 2720. The wearable device 200 according to an embodiment of the disclosure may maintain the state of the microphone in the OFF state in operation 2770 in case that the user's hand is detected. The wearable device 200 according to an embodiment of the disclosure may determine whether the device is connected with an external electronic device in operation 2730 in case that the user's hand is not detected. The wearable device 200 according to an embodiment of the disclosure may transition the state of the microphone module 247 to the OFF state in operation 2770 when not connected with the external electronic device. The wearable device 200 according to an embodiment of the disclosure may determine whether a plurality of apps are being executed in operation 2740 when determining that the wearable device 200 is not connected with the external electronic device. The wearable device 200 according to an embodiment of the disclosure may maintain the state of the microphone in the OFF state in operation 2770 in case that the plurality of apps are not being executed (e.g., when only one app is being executed). The wearable device 200 according to an embodiment of the disclosure may determine whether the user's gaze is fixed on an execution screen of a designated application for a designated time in operation 2750 in case that the plurality of applications are being executed. The wearable device 200 according to an embodiment of the disclosure may maintain the state of the microphone in the ON state in operation 2760 in case that the user's gaze is fixed on the execution screen of the designated application for the designated time. In FIG. 27, an embodiment is illustrated in which the wearable device 200 according to an embodiment of the disclosure transitions the state of the microphone module 247 to the ON state based on the conditions of operation 2720, operation 2730, operation 2740, and operation 1750. However, the wearable device 200 according to an embodiment of the disclosure may transition the state of the microphone module 247 to the ON state based on operation 2720, operation 2730, operation 2740, or operation 2750. For example, the wearable device 200 according to an embodiment of the disclosure may be controlled to transition the state of the microphone to the ON state in case that the user's hand is detected within the viewing angle of the wearable device 200.

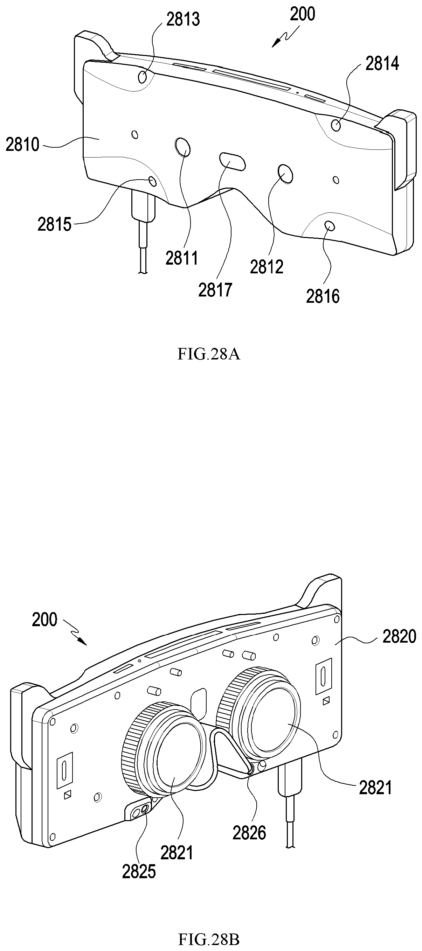

FIGS. 28A and 28B are example views illustrating another type of wearable device 200 of the disclosure.

Referring to FIGS. 28A and 28B, in an embodiment, camera modules 2811, 2812, 2813, 2814, 2815, 2815 and/or a depth sensor 2817 for acquiring information related to the surrounding environment of the wearable device 200 may be disposed on a first surface 2810 of the housing. In an embodiment, the camera modules 2811, 2812 may acquire images related to the surrounding environment of the wearable device. In an embodiment, the camera modules 2813, 2814, 2815, 2815 may acquire images in a state in which the wearable device 200 is worn by the user. Images acquired through the camera modules 2813, 2814, 2815, 2815 may be used for simultaneous localization and mapping (SLAM), 6 degrees of freedom (6DoF), 3 degrees of freedom (3DoF), subject recognition, and/or tracking, and may recognize and/or track the user's hand for use as input to the wearable electronic device. In an embodiment, the depth sensor 2817 may be configured to transmit a signal and receive a signal reflected from a subject, and may be used for identifying a distance to an object such as time of flight (TOF). According to an embodiment, camera modules 2825, 2815 for face recognition and/or a display 2821 (and/or a lens) may be disposed on a second surface 2820 of the housing. In an embodiment, the camera modules 2825, 2815 for face recognition adjacent to the display may be used for recognizing the user's face or may recognize and/or track both eyes of the user. In an embodiment, the display 2821 (and/or a lens) may be disposed on the second surface 2820 of the wearable device 200. The camera modules 2825, 2815 according to an embodiment of the disclosure may be used for detecting and tracking (FT, face tracking) the user's facial expression when the user wears the wearable device 200. The camera modules 2825, 2815 according to an embodiment of the disclosure may be disposed at a position capable of recognizing the user's facial expression (e.g., smiling expression, frowning expression, crying expression, or angry expression). The wearable device 200 according to an embodiment of the disclosure may analyze the captured user's face to recognize a facial expression and then implement an avatar expression corresponding to the recognized facial expression.

In an embodiment, the wearable device 200 may not include the camera modules 2815, 2815 among the plurality of camera modules 2813, 2814, 2815, 2815. Although not illustrated in FIGS. 28A and 28B, the wearable device 200 may further include at least one of the configurations illustrated in FIGS. 2A to 2C. As described above, according to an embodiment, the wearable device 200 may have a form factor for being worn on the user's head. The wearable device 200 may further include a strap and/or a wearing member (e.g., wearing member 203) for being fixed on a body part of the user. The wearable device 200 may provide a user experience based on augmented reality, virtual reality, and/or mixed reality in a state of being worn on the user's head.

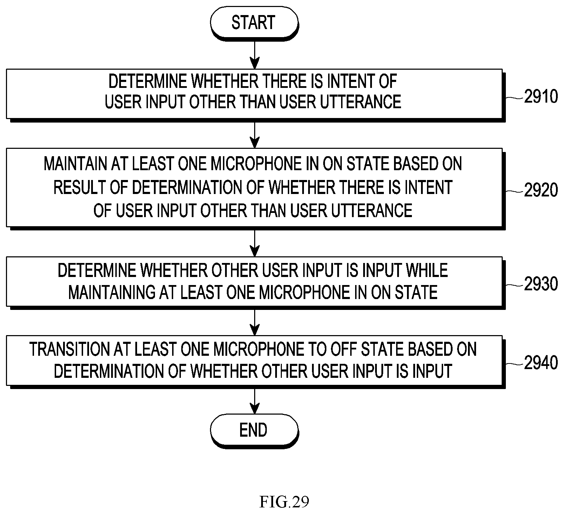

FIG. 29 is an example view illustrating an operation of the wearable device 200 according to an embodiment of the disclosure.

Referring to FIG. 29, the wearable device 200 according to an embodiment of the disclosure may determine whether there is an intent for user input other than user utterance in operation 2910. The wearable device 200 according to an embodiment of the disclosure may maintain at least one microphone in the ON state based on a result of the determination of whether there is an input intent for user input other than user utterance in operation 2920. The wearable device 200 according to an embodiment of the disclosure may determine whether other user input is input in a state in which at least one microphone is maintained in the ON state in operation 2930. The other user input according to an embodiment of the disclosure may include, e.g., the user's gesture and/or input through an external controller.

The wearable device 200 according to an embodiment of the disclosure may transition at least one microphone to the OFF state based on the determination of whether other user input is input. For example, the wearable device 200 according to an embodiment of the disclosure may transition at least one microphone to the OFF state if a designated user gesture is detected. However, in case that the designated user gesture is not detected but it is determined by the wearable device 200 that the user has an intent for gesture input (e.g., when a matching ratio between the user's gesture and a pre-designated gesture is determined and the determined matching ratio is equal to or greater than a threshold ratio (e.g., 50%) and/or when it is detected through the camera module 247 that the user is holding an external device in a hand or when it is detected that a designated virtual object is being pointed to through a controller), at least one microphone may be maintained in the ON state. In this case, when user utterance is input, the user's utterance may be processed using a limited utterance processing method according to an embodiment of the disclosure.

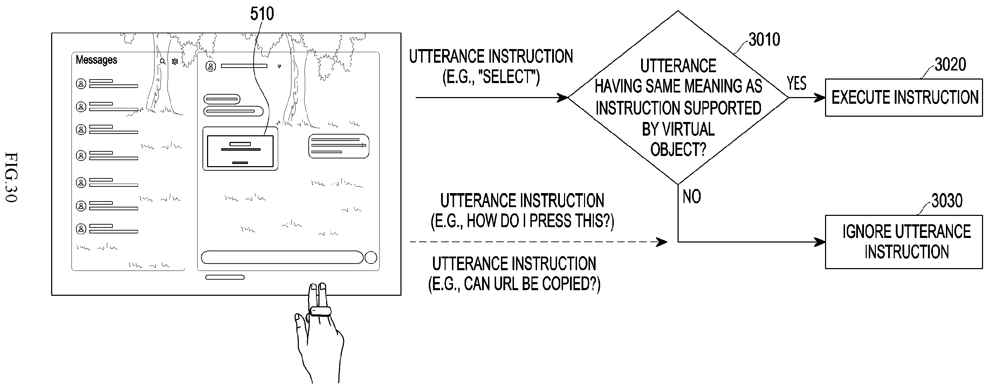

FIG. 30 is an example view illustrating a function or operation in which the wearable device 200 performs limited utterance processing according to an embodiment of the disclosure.

Referring to FIG. 30, the wearable device 200 according to an embodiment of the disclosure may detect a preparatory action of a user gesture for controlling the first virtual object 510 and/or an external input device. The wearable device 200 according to an embodiment of the disclosure may acquire user utterance (e.g., "select", "how do I press this?", or "can URL be copied?") in a state in which the preparatory action of the user gesture for controlling the first virtual object 510 and/or the external input device is detected. The wearable device 200 according to an embodiment of the disclosure may determine whether an utterance (e.g., "select", "click", "push", "input") having the same meaning as an instruction supported by the virtual object (e.g., the first virtual object 510) has been acquired in operation 3010. The wearable device 200 according to an embodiment of the disclosure may execute an instruction corresponding to the user's utterance (e.g., "select") in operation 3020 when determining that an utterance (e.g., "select", "click", "push", "input") having the same meaning as an instruction supported by the virtual object (e.g., the first virtual object 510) has been acquired (e.g., operation 3010-YES). The wearable device 200 according to an embodiment of the disclosure may ignore the utterance instruction input through the wearable device 200 (e.g., not output a result for the utterance instruction) in operation 3030 when determining that an utterance (e.g., "select", "click", "push", "input") having the same meaning as an instruction supported by the virtual object (e.g., the first virtual object 510) has not been acquired (e.g., operation 3010-NO). The wearable device 200 according to an embodiment of the disclosure may determine that an utterance (e.g., "select", "click", "push", "input") having the same meaning as an instruction supported by the virtual object (e.g., the first virtual object 510) has not been acquired when an utterance whose user intent is not clearly identified by the utterance itself is input, such as, e.g., "how do I press this?" or "can URL be copied?". Alternatively, the wearable device 200 according to an embodiment of the disclosure may determine that an utterance (e.g., "select", "click", "push", "input") having the same meaning as an instruction supported by the virtual object (e.g., the first virtual object 510) has not been acquired in case that the user's utterance includes at least one slang. The wearable device 200 according to an embodiment of the disclosure may process the user's utterance as a limited utterance processing method in case that the preparatory action of the user gesture for controlling the first virtual object 510 and/or the external input device is detected. As such, by processing the user's utterance through the limited utterance processing method, a technical effect of reducing power consumption of the wearable device and/or an external electronic device (e.g., an LLM server) may be generated by reducing the throughput of the processor.

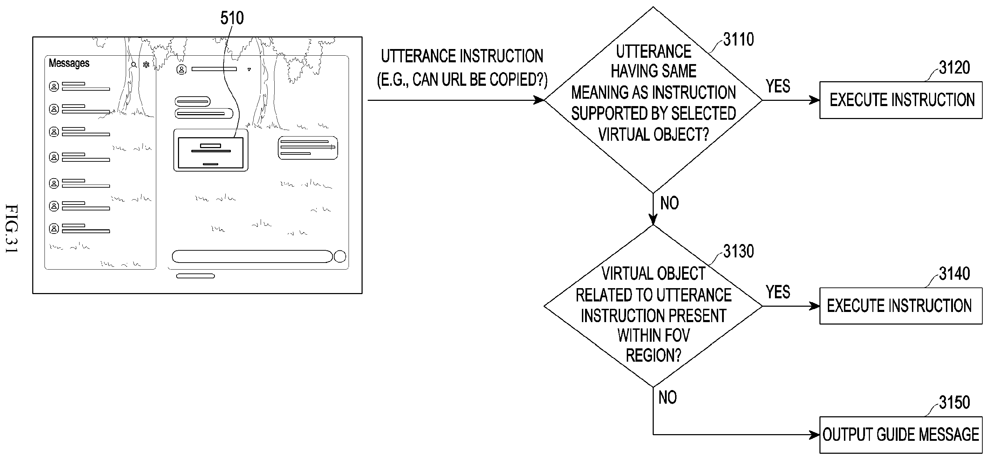

FIG. 31 is an example view illustrating a function or operation in which the wearable device 200 processes user utterance input through the wearable device 200 when an external device connected to the wearable device 200 according to an embodiment of the disclosure is not present and a gesture of the user (e.g., a preparatory action for the gesture) is also not detected.

Referring to FIG. 31, when an external device connected to the wearable device 200 according to an embodiment of the disclosure is not present and a gesture of the user (e.g., a preparatory action for the gesture) is also not detected, user utterance (e.g., "can URL be copied?") may be acquired. The wearable device 200 according to an embodiment of the disclosure may determine whether an utterance (e.g., "select", "click", "push", "input") having the same meaning as an instruction supported by the virtual object (e.g., the first virtual object 510) has been acquired in operation 3110. The wearable device 200 according to an embodiment of the disclosure may execute an instruction corresponding to the user's utterance (e.g., "select") in operation 3120 when determining that an utterance (e.g., "select", "click", "push", "input") having the same meaning as an instruction supported by the virtual object (e.g., the first virtual object 510) has been acquired (e.g., operation 3010-YES). The wearable device 200 according to an embodiment of the disclosure may determine whether a virtual object related to the utterance instruction is present within the viewing angle region in operation 3130 when determining that an utterance (e.g., "select", "click", "push", "input") having the same meaning as an instruction supported by the virtual object (e.g., the first virtual object 510) has not been acquired. For example, the wearable device 200 according to an embodiment of the disclosure may determine whether a virtual object including a URL address is present within the viewing angle of the wearable device 200 when user utterance such as "can URL be copied?" is acquired. The wearable device 200 according to an embodiment of the disclosure may execute a command corresponding to the user utterance in operation 3140 when a virtual object related to the utterance command is present within the viewing angle region (e.g., when a virtual object including a URL address is present). In this case, the wearable device 200 and/or an external electronic device (e.g., an LLM server) according to an embodiment of the disclosure may determine the user's utterance intent and execute a command corresponding to the user utterance based on the determined utterance intent. The wearable device 200 according to an embodiment of the disclosure may output a guide message guiding the user to select a virtual object related to the user's utterance by the user in operation 3150 when a virtual object related to the utterance command is not present within the viewing angle region. As such, according to an embodiment of the disclosure, when an external device connected to the wearable device 200 is not present and a gesture of the user (e.g., a preparatory action for the gesture) is also not detected, the user's utterance input may be determined as a main input and the user's utterance input may be processed.

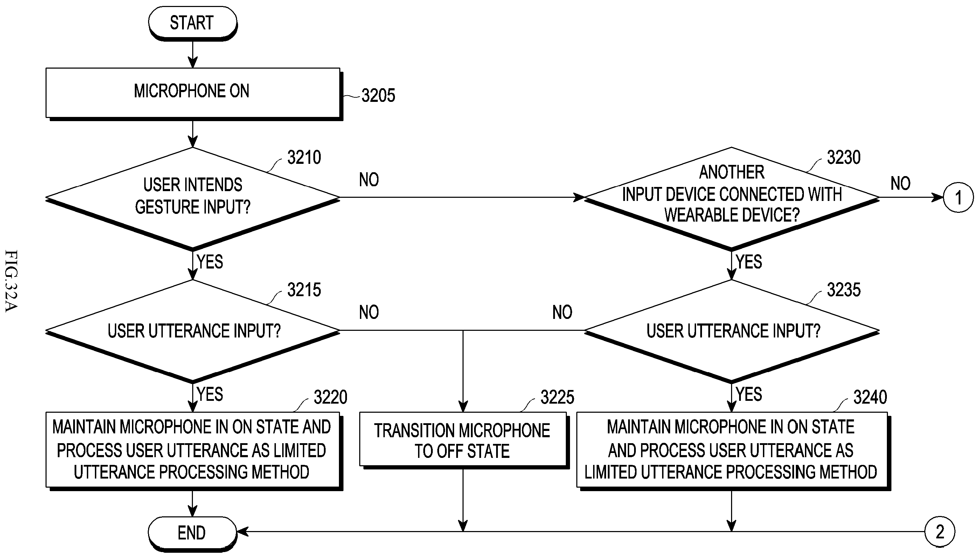

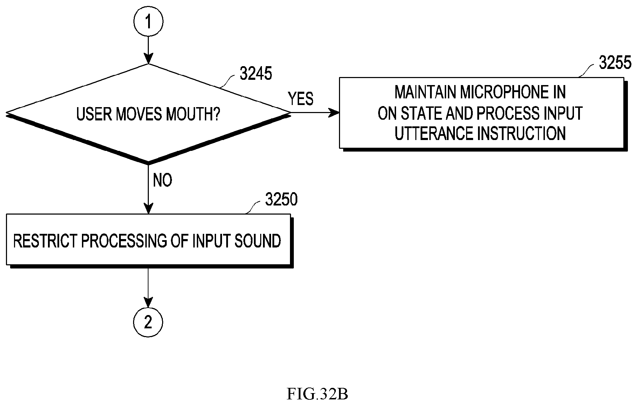

FIGS. 32A and 32B are example views illustrating a function or operation in which the wearable device 200 processes input user utterance as limited utterance processing based on an intent of gesture input of the user and/or a connection state of an external electronic device according to an embodiment of the disclosure.

Referring to FIGS. 32A and 32B, the wearable device 200 according to an embodiment of the disclosure may set the microphone to the ON state in operation 3205. The wearable device 200 according to an embodiment of the disclosure may determine whether the user intends gesture input in operation 3210. The wearable device 200 according to an embodiment of the disclosure may determine whether a portion of the user's body (e.g., a user's hand) is detected using a camera module (e.g., the third camera module 256). The wearable device 200 according to an embodiment of the disclosure may determine that the user has an intention to input a designated gesture when a portion of the user's body (e.g., a user's hand) is detected. The wearable device 200 according to an embodiment of the disclosure may determine a matching ratio of the user's hand movement to a pre-designated gesture as illustrated in FIG. 5E and may determine that the user is in the process of attempting a gesture input (e.g., determine that there is an intent for gesture input) in case that the determined matching ratio is equal to or greater than a threshold ratio (e.g., 50%). The wearable device 200 according to an embodiment of the disclosure may determine that there is an intent for user input when it is detected through the camera module 247 that the user is holding an external device in a hand or when a designated virtual object is being pointed to through a controller.

The wearable device 200 according to an embodiment of the disclosure may determine whether user utterance is input in operation 3215. The wearable device 200 according to an embodiment of the disclosure may maintain the microphone in the ON state and process user utterance as a limited utterance processing method in operation 3220 when user utterance is input (e.g., when user utterance is input within a designated time). The wearable device 200 according to an embodiment of the disclosure may determine that the user's intent is an intent to control the virtual object through gesture input and transition the microphone to the OFF state in operation 3225 when user utterance is not input (e.g., when user utterance is not input within a designated time). The wearable device 200 according to an embodiment of the disclosure may determine whether another input device is connected with the wearable device in operation 3230 in case that the user does not intend gesture input. The wearable device 200 according to an embodiment of the disclosure may determine whether user utterance is input in operation 3235. The wearable device 200 according to an embodiment of the disclosure may maintain the microphone in the ON state and process user utterance as a limited utterance processing method in operation 3240 when user utterance is input (e.g., when user utterance is input within a designated time). The wearable device 200 according to an embodiment of the disclosure may determine that the user's intent is an intent to control the virtual object through gesture input and transition the microphone to the OFF state in operation 3225 when user utterance is not input (e.g., when user utterance is not input within a designated time).

The wearable device 200 according to an embodiment of the disclosure may determine whether the user moves the mouth in operation 3245 when determining that another input device is not connected. The wearable device 200 according to an embodiment of the disclosure may maintain the microphone in the ON state and process the utterance command input through the wearable device 200 in operation 3255 when determining that the user moves the mouth. The wearable device 200 according to an embodiment of the disclosure may determine the sound input through the wearable device 200 as noise and restrict processing of the input sound in operation 3250 when determining that the user does not move the mouth.

The wearable device 200 according to an embodiment of the disclosure may include a display module, at least one microphone, at least one camera, at least one processor, and memory. The memory may be configured to store instructions that, when executed by the at least one processor, cause the wearable device to: display at least one virtual object through the display module, transition the at least one microphone from an OFF state to an ON state based on interaction between the at least one virtual object and a user wearing the wearable device, determine whether a gesture of the user is detected using the at least one camera while the at least one microphone is in the ON state, determine whether the gesture corresponds to a pre-designated gesture for controlling the virtual object based on the determination of whether the gesture is detected, and maintain the at least one microphone in the ON state or transition the at least one microphone to the OFF state based on the determination of whether the gesture corresponds to the pre-designated gesture.

An electronic device according to various embodiments disclosed in the disclosure may be a device of various types. An electronic device may include, e.g., a portable communication device (e.g., a smartphone), a computer device, a portable multimedia device, a portable medical device, a camera, a wearable device, or a home appliance. An electronic device according to an embodiment of the disclosure is not limited to the above-described devices.

Various embodiments of the disclosure and terms used therein are not intended to limit the technical features described in the disclosure to specific embodiments, and should be understood to include various modifications, equivalents, or substitutes of the corresponding embodiment. In connection to the description of drawings, similar reference numerals may be used for similar or related components. A singular form of a noun corresponding to an item may include one or more of the items unless the relevant context clearly indicates otherwise. In the disclosure, each of phrases such as "A or B," "at least one of A and B," "at least one of A or B," "A, B, or C," "at least one of A, B, and C," and "at least one of A, B, or C" may include any one of the items listed together in the corresponding phrase, or all possible combinations thereof. Terms such as "first" or "second" may be used simply to distinguish the corresponding component from another corresponding component and do not limit the corresponding components in other aspects (e.g., importance or order). When a predetermined (e.g., first) component is referred to as "coupled" or "connected" to another (e.g., second) component, with or without a term "functionally" or "communicatively," it may mean that the predetermined component may be connected to the other component directly (e.g., wiredly), wirelessly, or through a third component.

A term "module" used in various embodiments of the disclosure may include a unit implemented as hardware, software, or firmware, and may be used interchangeably with terms such as, e.g., logic, a logic block, a component, or a circuit. A module may be an integrally configured component or a minimum unit of the component or a component thereof that performs one or more functions. For example, according to an embodiment, a module may be implemented in the form of an application-specific integrated circuit (ASIC).

Various embodiments of the disclosure may be implemented as software (e.g., the program 2540) including one or more instructions stored in a storage medium (e.g., the internal memory 2536 or the external memory 2538) readable by a machine (e.g., the electronic device 2501). For example, a processor of a device (e.g., the electronic device 2501) may call at least one instruction among one or more instructions stored from a storage medium and execute the instruction. This enables the machine to be operated to perform at least one function according to the at least one instruction called. The one or more instructions may include code generated by a compiler or code executable by an interpreter. A machine-readable storage medium may be provided in the form of a non-transitory storage medium. Here, "non-transitory" means only that the storage medium is a tangible device and does not include a signal (e.g., electromagnetic wave), and this term does not distinguish between a case in which data is semi-permanently stored in the storage medium and a case in which data is temporarily stored.

According to an embodiment, a method according to various embodiments disclosed in the disclosure may be included and provided in a computer program product. A computer program product may be traded between a seller and a buyer as a commodity. A computer program product may be distributed in the form of a machine-readable storage medium (e.g., compact disc read only memory (CD-ROM)), or may be distributed (e.g., downloaded or uploaded) online through an application store (e.g., Play Store^{™}) or directly between two user devices (e.g., smartphones). In case of online distribution, at least part of a computer program product may be at least temporarily stored or temporarily generated in a machine-readable storage medium, such as memory of a server of a manufacturer, a server of an application store, or a relay server.

According to an embodiment of the disclosure, each component (e.g., a module or a program) of the above-described components may include a singular entity or a plurality of entities, and some of the plurality of entities may be separately disposed in another component. According to an embodiment of the disclosure, one or more components or operations among the above-described corresponding components may be omitted, or one or more other components or operations may be added. Alternatively or additionally, a plurality of components (e.g., a module or a program) may be integrated into a single component. In this case, the integrated component may perform one or more functions of each component of the plurality of components in a same or similar manner as performed by a corresponding component among the plurality of components before the integration. According to an embodiment of the disclosure, operations performed by a module, a program, or another component may be executed sequentially, in parallel, repetitively, or heuristically, or one or more of the operations may be executed in a different order, omitted, or one or more other operations may be added.

## Claims

1. A wearable device, comprising:
a display module;
at least one microphone;
at least one camera;
at least one processor; and
memory, wherein the memory is configured to store instructions that, when executed by the at least one processor, cause the wearable device to:
display at least one virtual object through the display module;
transition the at least one microphone from an OFF state to an ON state based on interaction between the at least one virtual object and a user wearing the wearable device;
determine whether a gesture of the user is detected using the at least one camera while the at least one microphone is in the ON state;
determine whether the gesture corresponds to a pre-designated gesture for controlling the virtual object based on the determination of whether the gesture is detected; and
maintain the at least one microphone in the ON state or transition the at least one microphone to the OFF state based on the determination of whether the gesture corresponds to the pre-designated gesture.

2. The wearable device of claim 1,
wherein the instructions, when executed by the at least one processor, further cause the wearable device to:
determine whether an intent of the user determined by the detected gesture is an intent to input the gesture based on the detected gesture not corresponding to the pre-designated gesture for controlling the virtual object;
determine whether an identical gesture is detected a designated number of times or more when determining that the intent of the user is the intent to input the gesture; and
provide a designated utterance hint to the user through the display module in case that the identical gesture is detected the designated number of times or more.

3. The wearable device of claim 1 or 2,
wherein the instructions, when executed by the at least one processor, further cause the wearable device to:
determine whether an external device operatively connected with the wearable device is present when determining that the intent of the user determined by the detected gesture is not the intent to input the gesture;
determine whether input from the external device is acquired in case that the external device is present; and
transition the at least one microphone from the ON state to the OFF state based on designated input being acquired from the external device.

4. The wearable device of any one of claims 1 to 3,
wherein the instructions, when executed by the at least one processor, further cause the wearable device to:
determine whether voice input is acquired from the user when determining that the external device is not present;
determine whether there is movement of the mouth of the user using the at least one camera based on the voice input being acquired; and
maintain the state of the at least one microphone in the ON state based on it being determined that there is movement of the mouth of the user.

5. The wearable device of any one of claims 1 to 4,
wherein the instructions, when executed by the at least one processor, further cause the wearable device to transition the state of the at least one microphone from the ON state to the OFF state based on the detected gesture corresponding to the pre-designated gesture for controlling the virtual object.

6. The wearable device of any one of claims 1 to 5,
wherein the instructions, when executed by the at least one processor, further cause the wearable device to determine whether the external device operatively connected with the wearable device is present based on it being determined that the gesture of the user is not detected.

7. The wearable device of any one of claims 1 to 6,
wherein the instructions, when executed by the at least one processor, further cause the wearable device to:
maintain the state of the at least one microphone in the ON state in case that the identical gesture is detected the designated number of times or more; and
process the utterance of the user through the wearable device in case that the utterance of the user is acquired in the state maintained in the ON state.

8. A method for controlling a wearable device, the method comprising:
displaying at least one virtual object through a display module of the wearable device;
transitioning at least one microphone from an OFF state to an ON state based on interaction between the at least one virtual object and a user wearing the wearable device;
determining whether a gesture of the user is detected using at least one camera while the at least one microphone is in the ON state;
determining whether the gesture corresponds to a pre-designated gesture for controlling the virtual object based on the determination of whether the gesture is detected; and
maintaining the at least one microphone in the ON state or transitioning the at least one microphone to the OFF state based on the determination of whether the gesture corresponds to the pre-designated gesture.

9. The method of claim 8, further comprising:
determining whether an intent of the user determined by the detected gesture is an intent to input the gesture based on the detected gesture not corresponding to the pre-designated gesture for controlling the virtual object;
determining whether an identical gesture is detected a designated number of times or more when determining that the intent of the user is the intent to input the gesture; and
providing a designated utterance hint to the user through the display module in case that the identical gesture is detected the designated number of times or more.

10. The method of claim 8 or 9, further comprising:
determining whether an external device operatively connected with the wearable device is present when determining that the intent of the user determined by the detected gesture is not the intent to input the gesture;
determining whether input from the external device is acquired in case that the external device is present; and
transitioning the at least one microphone from the ON state to the OFF state based on designated input being acquired from the external device.

11. The method of any one of claims 8 to 10, further comprising:
determining whether voice input is acquired from the user when determining that the external device is not present;
determining whether there is movement of the mouth of the user using the at least one camera based on the voice input being acquired; and
maintaining the state of the at least one microphone in the ON state based on it being determined that there is movement of the mouth of the user.

12. The method of any one of claims 8 to 11,
further comprising transitioning the state of the at least one microphone from the ON state to the OFF state based on the detected gesture corresponding to the pre-designated gesture for controlling the virtual object.

13. The method of any one of claims 8 to 12,
further comprising determining whether the external device operatively connected with the wearable device is present based on it being determined that the gesture of the user is not detected.

14. The method of any one of claims 8 to 13, further comprising:
maintaining the state of the at least one microphone in the ON state in case that the identical gesture is detected the designated number of times or more; and
processing the utterance of the user through the wearable device in case that the utterance of the user is acquired in the state maintained in the ON state.

15. A non-transitory computer-readable recording medium configured to store instructions, wherein the instructions, when executed by at least one processor of a wearable device, cause the wearable device to:
display at least one virtual object through a display module of the wearable device;
transition at least one microphone from an OFF state to an ON state based on interaction between the at least one virtual object and a user wearing the wearable device;
determine whether a gesture of the user is detected using at least one camera while the at least one microphone is in the ON state;
determine whether the gesture corresponds to a pre-designated gesture for controlling the virtual object based on the determination of whether the gesture is detected; and
maintain the at least one microphone in the ON state or transition the at least one microphone to the OFF state based on the determination of whether the gesture corresponds to the pre-designated gesture.
